(19) Europäisches Patentamt
European Patent Office
Office européen des brevets

(11) EP 1 902 111 B1

(12) EUROPÄISCHE PATENTSCHRIFT

(45) Veröffentlichungstag und Bekanntmachung des Hinweises auf die Patenterteilung:
**23.02.2011 Patentblatt 2011/08**

(21) Anmeldenummer: **05850429.1**

(22) Anmeldetag: **02.12.2005**

(51) Int Cl.:
***C09J 7/02*** *(2006.01)* ***C09J 11/04*** *(2006.01)*
***B32B 27/08*** *(2006.01)* ***B32B 15/08*** *(2006.01)*
***G02F 1/13357*** *(2006.01)*

(86) Internationale Anmeldenummer:
**PCT/EP2005/056409**

(87) Internationale Veröffentlichungsnummer:
**WO 2006/133745 (21.12.2006 Gazette 2006/51)**

(54) **DOPPELSEITIGE HAFTKLEBEBÄNDER ZUR HERSTELLUNG VON LC-DISPLAYS MIT LICHTREFLEKTIERENDEN UND ABSORBIERENDEN EIGENSCHAFTEN**

TWO-SIDED PRESSURE-SENSITIVE ADHESIVE TAPES FOR THE PRODUCTION OF LIQUID CRYSTAL DISPLAYS WITH LIGHT-REFLECTIVE AND ABSORBING PROPERTIES

BANDES ADHESIVES DOUBLE FACE A PROPRIETES DE REFLEXION ET D'ABSORPTION DE LA LUMIERE, POUR LA FABRICATION D'AFFICHEURS A CRISTAUX LIQUIDES

(84) Benannte Vertragsstaaten:
**DE ES FR GB IT**

(30) Priorität: **13.06.2005 DE 102005027392**

(43) Veröffentlichungstag der Anmeldung:
**26.03.2008 Patentblatt 2008/13**

(73) Patentinhaber: **TESA SE**
**20253 Hamburg (DE)**

(72) Erfinder:
- **HUSEMANN, Marc**
**22605 Hamburg (DE)**
- **STORBECK, Reinhard**
**22457 Hamburg (DE)**

(56) Entgegenhaltungen:
**WO-A-2005/019367**
**US-A1- 2004 028 895**
**US-A1- 2004 076 768**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 1 902 111 B1

## Beschreibung

Die Erfindung betrifft doppelseitige Haftklebebänder mit mehrschichtigen Haftklebemasseaufbauten und mit lichtreflektierenden und absorbierenden Eigenschaften zur Herstellung von Flüssigkristall-Datenanzeigen (Liquid Crystal Displays, LCDs).

Haftklebebänder sind im Zeitalter der Industrialisierung weit verbreitete Verarbeitungshilfsmittel. Insbesondere für den Einsatz in der Computerindustrie werden an Haftklebebänder sehr hohe Anforderungen gestellt. Neben einem geringen Ausgasungsverhalten sollten- die Haftklebebänder in einem weiten Temperaturbereich einsetzbar sein und bestimmte optische Eigenschaften erfüllen.

Ein Einsatzgebiet sind optische Flüssigkristall-Datenanzeigen (Liquid Crystal Displays, LCDs), die für Computer, Fernsehgeräte, Laptops, PDAs, Mobiltelefone, Digitalkameras etc. benötigt werden. Ein sehr verbreiteter Typ eines LCD Moduls für solche Anwendungen ist in Figur 1 dargestellt. Fig. 1 zeigt das Konzept für ein doppelseitiges Klebeband mit einer schwarzen Schicht zur Absorption und einer weißen Schicht zur Reflexion gemäß dem Stande der Technik; dabei bedeuten:

| | | | |
|---|---|---|---|
| 1 | LCD-Glas | 8 | Reflektionsfolie |
| 2 | doppelseitiges schwarz-weißes Klebeband | 9 | LCD-Gehäuse |
| 3 | Haftklebemasse | 10 | schwarze absorbierende Klebebandseite |
| 4 | Lichtquelle (LED) | 11 | reflektierende Seite |
| 5 | Lichtstrahlen | 12 | sichtbarer Bereich |
| 6 | doppelseitiges Klebeband | 13 | "blinder" Bereich |
| 7 | Lichtleiter | | |

Zur Herstellung von LC-Displays werden Leuchtdioden (Light Emitting Diode, LED) als Lichtquelle mit dem LCD-Glas verklebt. Hierfür werden in der Regel schwarze doppelseitige Haftklebebänder eingesetzt. Durch die schwarze Einfärbung soll erreicht werden, dass im Bereich des doppelseitigen Haftklebebandes kein Licht von innen nach außen und umgekehrt dringt.
Es existieren bereits viele Konzepte, solch eine Schwarzfärbung zu erreichen. Auf der anderen Seite möchte man die Lichteffizienz des rückseitigen Lichtmoduls erhöhen, so dass bevorzugt doppelseitige Klebebänder eingesetzt werden, die auf einer Seite schwarz sind (lichtabsorbierend) und auf der anderen Seite lichtreflektierend.

Zur Herstellung der schwarzen Seite existieren viele Konzepte.
Ein Konzept zur Herstellung von schwarzen doppelseitigen Haftklebebändern besteht in der Einfärbung der Trägermaterials. In der Elektronik-Industrie werden sehr bevorzugt doppelseitige Haftklebebänder mit Polyesterfilm-Trägem (PET) eingesetzt, da diese sich sehr gut stanzen lassen. Die PET-Träger kann man mit Ruß oder schwarzen Farbpigmenten einfärben, um eine Absorption des Lichtes zu erreichen. Der Nachteil dieses bestehenden Konzeptes ist die geringe Absorption des Lichtes. In sehr dünnen Trägerschichten lassen sich nur eine relativ geringe Anzahl Ruß- oder anderer schwarzer Pigmentpartikel einbringen mit der Folge, dass keine vollständige Absorption des Lichtes erreicht wird. Mit dem Auge und auch mit intensiveren Lichtquellen (Lichtstärke größer 600 Candela) kann dann die mangelnde Absorption ermittelt werden. Weiterhin besteht die Gefahr, dass bei Repositionierungen schwarze Rückstände auf dem verklebenden Substrat verbleiben und dieses entsorgt werden muss.

Ein weiteres Konzept zur Herstellung von schwarzen doppelseitigen Haftklebebändern betrifft die Herstellung eines zweischichtigen Trägermaterials mittels Coextrusion. Trägerfolien werden üblicherweise über Extrusion hergestellt. Durch die Coextrusion wird neben dem konventionellen Trägermaterial eine zweite schwarze Schicht coextrudiert, die die Funktion der Lichtabsorption erfüllt. Auch dieses Konzept weist verschiedene Nachteile auf. Z.B. müssen für die Extrusion Antiblockmittel eingesetzt werden, die dann im Produkt zu den sogenannten Pinholes führen. Diese Pinholes sind optische Störstellen (Lichtdurchtritt an diesen Löchern) und beeinflussen negativ die Funktionsweise im LCD.
Ein weiteres Problem sind die Schichtdicken, da die zwei Schichten zunächst einzeln in der Düse ausgeformt werden und sich somit insgesamt nur relativ dicke Trägerschichten realisieren lassen, mit der Folge, dass die Folie relativ dick und unflexibel wird und sich somit an die zu verklebenden Flächen nur noch schlecht anpasst. Zudem muss die schwarze Schicht ebenfalls relativ dick sein, da ansonsten keine vollständige Absorption realisiert werden kann. Ein weiterer Nachteil besteht in den veränderten mechanischen Eigenschaften des Trägermaterials, da die schwarze Schicht andere mechanische Eigenschaften wie das ursprüngliche Trägermaterial (z. B. reines PET) aufweist. Ein weiterer Nachteil für die zweischichtige Version des Trägermaterials ist die unterschiedliche Verankerung der Klebemasse auf dem coextrudierten Trägermaterial. Für diesen Fall der Ausführungsform ist eine Schwachstelle im doppelseitigen Klebeband enthalten.

In einem weiteren Konzept wird eine schwarze Farblackschicht auf das Trägermaterial beschichtet. Dies kann einseitig oder doppelseitig auf dem Träger erfolgen. Auch dieses Konzept weist verschiedene Nachteile auf. Zum einen entstehen auch hier leicht Fehlstellen (Pinholes), die durch Antiblockmittel während des Folienextrusionsprozesses mit eingetragen werden. Diese sind für die finale Anwendung im LC-Display nicht akzeptabel. Weiterhin entsprechen die maximalen Absorptionseigenschaften nicht den Anforderungen, da nur relativ dünne Lackschichten aufgetragen werden können. Auch hier ist man in den Schichtdicken nach oben begrenzt, da sich ansonsten die mechanischen Eigenschaften des Trägermaterials verändern würden.

Bei der Entwicklung von LC-Displays entwickelt sich ein Trend. Zum einen sollen die LC-Displays leichter und sowie flacher werden, und es besteht ein stark steigender Bedarf für immer größere Displays mit immer höherer Auflösung.

Aus diesem Grund wurde das Design der Displays geändert, und die Lichtquelle rückt entsprechend immer näher an das LCD-Panel, mit der Konsequenz, dass die Gefahr steigt, dass immer mehr Licht nach außen in die Randzone des LCD-Panels eindringt ("blind area") (vergleiche Figur 1). Mit dieser Entwicklung steigen auch die Anforderungen an die Abschattungseigenschaften (black-out Eigenschaften) des doppelseitigen Klebebandes, und es besteht somit der Bedarf nach neuen Konzepten zur Herstellung von schwarzen Klebebändern.

Auf der anderen Seite sollte das doppelseitige Haftklebeband reflektierend sein.

Dazu sind doppelseitige Haftklebebänder bekannt, die auf einer Seite eine weiße oder eine metallische Schicht und auf der anderen Seite eine schwarze lichtabsorbierende Schicht aufweisen.

Mit diesen Haftklebebändern wurde im Hinblick auf Lichtreflektion auf der einen Seite und Absorption auf der gegenüberliegenden Seite eine deutliche Verbesserung erzielt, aber durch die Antiblockmittel in der Trägerschicht treten Unregelmäßigkeiten in der reflektierenden Seite auf.

Generell weisen doppelseitige Haftklebebänder mit einer weißen und einer schwarzen Schicht gegenüber doppelseitigen Haftklebebändern mit einer metallischen und einer schwarzen Schicht Prozessvorteile auf, da bei der Positionierung im LCD in schwarz/metallischen Haftklebebandstanzlingen leicht Knickstellen eingearbeitet werden, die sich dann unmittelbar negativ auf die reflektierenden Eigenschaften ausüben.

Einige Konzepte zur Herstellung von lichtabsorbierenden und -reflektierenden doppelseitigen Klebebändern sind ebenfalls in der Patentliteratur zu finden.

Zur Erzielung einer reflektierenden Schicht können der Haftklebemasse z.B. reflektierende Partikel beigemischt werden. Die erzielbaren reflektierenden Eigenschaften sind aber unzureichend.

In der JP 2002-350612 werden doppelseitige Klebebänder für LCD-Panels mit lichtschützenden Eigenschaften, beschrieben. Die Funktion wird durch eine Metallschicht, welche ein- oder beidseitig auf die Trägerfolie aufgetragen ist, erreicht, wobei die Trägerfolie zusätzlich noch eingefärbt sein kann. Durch die Metallisierung ist die Herstellung des Klebebandes relativ aufwendig und das Klebeband selbst besitzt eine mangelhafte Planlage.

In der JP 2002-023663 werden ebenfalls doppelseitige Klebebänder für LCD-Panels mit lichtschützenden Eigenschaften beschrieben. Auch hier wird die Funktion durch eine Metallschicht, welche ein- oder beidseitig auf die Trägerfolie aufgetragen ist, erreicht.

In der DE 102 43 215 A werden doppelseitige Klebebänder für LC-Displays mit lichtabsorbierenden Eigenschaften auf der einen Seite und lichtreflektierenden Eigenschaften auf der anderen Seite beschrieben. In dieser Schrift werden schwarz/silberne doppelseitige Haftklebebänder beschrieben.

Die US 2004/028895 A offenbart ein Klebeband für LCD-Module bestehend aus einer Trägerfolie z.B. aus PET. Das Trägermaterial ist beidseitig mit einer Haftklebemasse beschichtet. Die Träegrschicht kann entweder selbst weiß eingefärbt sein, beispielsweise weiße Pigmente enthalten, oder auf eine ihrer Oberflächen wurde eine weiße Farbe aufgetragen. Zwischen den äußeren Haftklebemassenschichten und der Trägerfolie befindet sich noch eine lichtabsorbierende Schicht, bei der es sich auch um eine schwarz gefärbte Klebstoffschicht handeln kann. Die äußeren Haftklebeschichten sind transparent.

Die WO 2005/019367 beschreibt ein Haftklebeband zur Herstellung einer Verklebung von optischen Flüssigkristall-Datenanzeigen (LCDs), mit einer Trägerfolie und äußeren Haftklebeschichten, das jedoch keine schwarz eingefärbten Farbschichten, sondern zwei schwarze Farbschichten aufweist. Eine weiße, reflektierende Schicht kann im Aufbau vorgesehen sein.

Für die Verklebung von LC-Displays bzw. zur deren Herstellung besteht somit weiterhin der Bedarf für doppelseitige Haftklebebänder, welche die oben beschriebenen Mängel nicht oder nur in verminderter Weise aufweisen.

Aufgabe der Erfindung ist es, ein doppelseitiges Haftklebeband zur Verfügung zu stellen, welches die Pinholes vermeidet, welches in der Lage ist, Licht weitgehend vollständig zu absorbieren und welches eine hohe Reflexion von Licht aufweist.

Gelöst wird die Aufgabe durch ein Haftklebeband, wie es im Hauptanspruch dargestellt ist. Im Rahmen dieser Erfindung wurde überraschender Weise gefunden, dass sich solche Klebebänder mit speziellen zweischichtigen Haftklebemassen herstellen lassen. Die farbtragende lichtabsorbierende Schicht besitzt dabei keinen direkten Kontakt zum verklebenden Substrat, trägt aber zu den klebtechnischen Eigenschaften bei. Insbesondere war es überraschend, dass

das doppelseitige Klebeband keine Pinholes und geeignet war zur Herstellung von LCD Modulen.
Die Unteransprüche betreffen vorteilhafte Weiterentwicklungen des erfindungsgemäßen Haftklebebandes sowie dessen Verwendung.

Dementsprechend betrifft der Hauptanspruch ein Haftklebeband, insbesondere zur Herstellung einer Verklebung von optischen Flüssigkristall-Datenanzeigen (LCDs), aufweisend eine Ober- und eine Unterseite, mit lichtreflektierenden Eigenschaften auf der Oberseite und lichtabsorbierenden Eigenschaften auf der Unterseite, weiterhin aufweisend eine Trägerfolie mit einer Ober- und einer Unterseite, wobei das Haftklebeband beidseitig mit einer äußeren Haftklebeschicht ausgerüstet ist, wobei weiterhin zumindest eine weiß gefärbte Haftklebemassenschicht zur Bewirkung der Lichtreflektion und zumindest eine schwarz eingefärbte Haftklebemassenschicht zur Bewirkung der Lichtabsorption zwischen den äußeren Haftklebeschichten vorgesehen ist und wobei zumindest die äußere Haftklebeschicht auf der Oberseite transparent ist. Dabei ist erfindungsgemäß die zumindest zumindest eine weiß gefärbte Schicht zwischen der Trägerfolie und der Haftklebeschicht auf der Oberseite vorgesehen, und die Haftklebematrix der weiß gefärbten Haftklebemassenschicht ist identisch ist mit der Haftklebemasse der Haftklebeschicht auf der Oberseite.

In einer vorteilhaften Ausführungsform der Erfindung sind beide äußeren Haftklebeschichten transparent.

In einer vorteilhaften Ausgestaltung ist in dem Haftklebeband weiterhin zumindest eine weitere, metallische Schicht vorgesehen.

Im Folgenden soll die Erfindung anhand einiger besonders vorteilhafter Ausführungsformen näher beschrieben werden, ohne sich durch die Wahl der Beispiele unnötig beschränken zu wollen.

Figur 2 zeigt eine bevorzugte Ausführungsform der Erfindung. Hier besteht das doppelseitige Haftklebeband aus einer transparenten Trägerfolie (a'), zwei transparenten Haftklebeschichten (b) und (b'), einer nicht transparenten mit Ruß gefärbten Haftklebeschicht (c) und einer weiß gefärbten Haftklebeschicht (e).

In einer weiteren bevorzugten Ausführungsform der Erfindung (vergleiche hierzu Figur 3 ) besteht das doppelseitige Haftklebeband aus einer transparenten Trägerfolie (a'), zwei transparenten Haftklebeschichten (b) und (b'), einer nicht transparenten mit Ruß gefärbten Haftklebeschicht (c), einer metallisch lichtabsorbierenden Schicht (d) und einer weiß gefärbten Haftklebeschicht (e).

Im Folgenden wird die Erfindung weiter erläutert. Alle angegebenen Grenzwerte sind als Inklusivwerte zu verstehen, also im angegebenen Grenzbereich enthalten.

Die Trägerfolie (a) bzw. (a') ist bevorzugt zwischen 5 und 250 μm, mehr bevorzugt zwischen 8 und 50 μm, äußerst bevorzugt zwischen 12 und 36 μm dick. Die Schicht (a) ist weiß eingefärbt und von sehr geringer Lichtdurchlässigkeit, wohingegen die Schicht (a') bevorzugt transparent ist. Die Schicht (d) ist metallisch glänzend. In einer bevorzugten Ausführung der Erfindung wird die Folie (a) bzw. (a') einseitig mit Aluminium oder Silber bedampft. Die Schichtdicke der Schicht (d) liegt bevorzugt zwischen 5 nm und 200 nm. Die Schicht (c) ist eine schwarzfarbige Haftklebeschicht, die bevorzugt eine Schichtdicke zwischen 5 und 100 μm aufweist. Die Haftklebeschichten (b) und (b') können gleicher oder unterschiedlicher chemischer Natur sein und gleicher oder unterschiedlicher Schichtdicke. Sie sind transparent und weisen bevorzugt eine Schichtdicke zwischen 5 und 250 μm auf. Die Schicht (e) ist eine weißfarbige Haftklebeschicht, die bevorzugt eine Schichtdicke zwischen 5 und 100 μm aufweist.

Die einzelnen Schichten (b), (b'), (c), (d) und (e) können sich innerhalb des doppelseitigen Haftklebebandes im Hinblick auf die Schichtdicke unterscheiden, so dass beispielsweise unterschiedlich dicke Haftklebemassenschichten aufgetragen werden können.

Trägerfolie (a) bzw. (a')

Als Folienträger können prinzipiell alle filmischen Polymerträger eingesetzt werden, die weiß gefärbt werden können bzw. transparent sind (Schicht (a) bzw. (a')). So lassen sich z.B. Polyethylen, Polypropylen, Polyimid, Polyester, Polyamid, Polymethacrylat, fluorierte Polymerfolien etc. einsetzen. In einer besonders bevorzugten Ausführungsform werden Polyesterfolien eingesetzt, besonders bevorzugt PET-Folien (Polyethylenterephthalat). Die Folien können entspannt sein oder eine oder mehrere Vorzugsrichtungen aufweisen. Vorzugsrichtungen werden erzielt durch Streckung in einer oder in zwei Richtungen.

Bei der Herstellung einiger der erfindungsgemäß eingesetzten Folien, z.B. PET-Folien, werden Antiblockmittel, wie z.B. Siliziumdioxid, Kieselkreide oder Kreide, Zeolithe, eingesetzt.

Insbesondere für sehr dünne Folien, besonders bevorzugt 12 μm dicke PET-Folien, lassen sich Pinholes sehr gut vermeiden, wenn die PET-Folie mit Metall beschichtet wird. Weiterhin sind 12 μm PET Folien deutlich zu bevorzugen, da diese sehr gute klebtechnische Eigenschaften für das doppelseitige Klebeband zu lassen, da hier die Folie sehr flexibel ist und sich gut den Oberflächenrauhigkeiten der zu verklebenden Substrate anpassen kann.

Zur Verbesserung der Verankerung der Lackschichten ist es sehr vorteilhaft, wenn die Folien vorbehandelt werden. Die Folien können geätzt sein (z.B. Trichloressigäure oder Trifluoressigsäure), mit Corona oder Plasma vorbehandelt sein oder mit einem Primer (z.B. Saran) ausgestattet sein.
Des Weiteren enthält die Folie (a) Farbpigmente oder farbtragende Partikel, aus denen eine Weißfärbung resultiert. Als

Weißpigmente lassen sich z.B. Titandioxid, Bariumsulfat, Calciumcarbonat, Zinkoxid, Zinksulfid und Bleicarbonat einsetzen. Im Falle einer Einfärbung durch Titandioxidzusätze lassen sich sowohl Pigmente auf Basis von Anatas- als auch von Rutilstrukturen einsetzen. Weiterhin lassen sich diese Pigmente auch in Kombination mit organischen Pigmenten einsetzen.

Die Pigmente oder Partikel sollten aber bevorzugt kleiner im Durchmesser sein als die finale Schichtdicke der Trägerfolie. Optimale Einfärbungen lassen sich mit 5 bis 40 Gew.-% Partikelanteilen, bezogen auf das Folienmaterial, erzielen.

Haftklebemassen (b) und (b')

Die Haftklebemassen (b) und (b') auf beiden Seiten des Haftklebebandes können unterschiedlich oder identisch sein.

Generell lassen sich als Rohstoffbasis Haftklebemassensysteme basierend auf Acrylat-, Naturkautschuk-, Synthesekautschuk-, Silikon- oder EVA-Kleber einsetzen. Für den Fall der erfinderischen Ausführungsform, dass das doppelseitige erfinderische Haftklebeband auf zumindest einer Seite eine hohe Reflexion aufweisen muss, weist die Haftklebemasse (b) sehr bevorzugt eine hohe Transparenz auf.

Weiterhin lassen sich die weiteren, dem Fachmann bekannten Haftklebemassen verarbeiten. Einen Überblick über den Stand der Technik gibt beispielsweise das "Handbook of Pressure Sensitive Adhesive Technology" von Donatas Satas (van Nostrand, New York 1989).

Für (b) und (b') lassen sich Naturkautschukklebemassen einsetzen. Hier wird der Naturkautschuk bevorzugt bis zu einem Molekulargewicht (Gewichtsmittel) nicht unter etwa 100.000 Dalton, bevorzugt nicht unter 500.000 Dalton gemahlen und additiviert.

Bei Kautschuk/Synthesekautschuk als Ausgangsmaterial für den Kleber sind weite Variationsmöglichkeiten gegeben. Eingesetzt werden können Naturkautschuke oder Synthesekautschuke oder beliebige Blends aus Naturkautschuken und/oder Synthesekautschuken, wobei der Naturkautschuk oder die Naturkautschuke grundsätzlich aus allen erhältlichen Qualitäten wie zum Beispiel Crepe-, RSS-, ADS-, TSR- oder CV-Typen, je nach benötigtem Reinheits- und Viskositätsniveau, und der Synthesekautschuk oder die Synthesekautschuke aus der Gruppe der statistisch copolymerisierten Styrol-Butadien-Kautschuke (SBR), der Butadien-Kautschuke (BR), der synthetischen Polyisoprene (IR), der Butyl-Kautschuke (IIR), der halogenierten Butyl-Kautschuke (XIIR), der Acrylatkautschuke (ACM), der Etylen-Vinylacetat-Copolymeren (EVA) und der Polyurethane und/oder deren Blends gewählt werden können.

Weiterhin vorzugsweise können den Kautschuken zur Verbesserung der Verarbeitbarkeit thermoplastische Elastomere mit einem Gewichtsanteil von 10 bis 50 Gew.-% zugesetzt werden, und zwar bezogen auf den Gesamtelastomeranteil. Stellvertretend genannt seien an dieser Stelle vor allem die besonders verträglichen Styrol-Isopren-Styrol- (SIS) und Styrol-Butadien-Styrol (SBS) -Typen.

In einer erfinderisch bevorzugten Ausführungsform werden bevorzugt (Meth)acrylathaftklebemassen eingesetzt.

Erfindungsgemäß eingesetzte (Meth)Acrylathaftklebemassen, welche durch radikalische Polymerisation erhältlich sind, bestehen bevorzugt zu mindestens 50 Gew.-% auf zumindest einem acrylischen Monomer aus der Gruppe der Verbindungen der folgenden allgemeinen Formel:

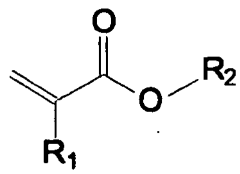

Dabei ist der Rest $R_1$ = H oder $CH_3$; und der Rest $R_2$ = H oder $CH_3$ oder wird gewählt aus der Gruppe beinhaltend die verzweigten und unverzweigten, gesättigten Alkylgruppen mit 1 - 30 Kohlenstoffatomen.

Die Monomere werden bevorzugt dermaßen gewählt, dass die resultierenden Polymere bei Raumtemperatur oder höheren Temperaturen als Haftklebemassen eingesetzt werden können, insbesondere derart, dass die resultierenden Polymere haftklebende Eigenschaften entsprechend des "Handbook of Pressure Sensitive Adhesive Technology" von Donatas Satas (van Nostrand, New York 1989) besitzen.

In einer weiteren erfinderischen Ausführungsform wird die Comonomerzusammensetzung derart gewählt, dass sich die Haftklebemassen als hitzeaktivierbare Haftklebemassen einsetzen lassen.

Die Polymere lassen sich bevorzugt durch Polymerisation einer Monomermischung gewinden, welche sich

aus Acrylsäureestern und/oder Methacrylsäureestern und/oder deren freien Säuren mit der Formel $CH_2 = CH(R_1)(COOR_2)$ zusammensetzt, wobei $R_1$ = H oder $CH_3$ und $R_2$ eine Alkylkette mit 1 - 20 C-Atomen oder H ist.

Die Molmassen $M_w$ (Gewichtsmittel) der eingesetzten Polyacrylate betragen bevorzugt $M_w \geq 200.000$ g/mol.

In einer sehr bevorzugten Weise werden Acryl- oder Methacrylmomonere eingesetzt, die aus Acryl- und Methacrylsäureester mit Alkylgruppen aus 4 bis 14 C-Atomen bestehen, bevorzugt 4 bis 9 C-Atomen umfassen. Spezifische Beispiele, ohne sich durch diese Aufzählung einschränken zu wollen, sind Methylacrylat, Methylmethacrylat, Ethylacrylat, n-Butylacrylat, n-Butylmethacrylat, n-Pentylacrylat, n-Hexylacrylat, n-Heptylacrylat, n-Octylacrylat, n-Octylmethacrylat, n-Nonylacrylat, Laurylacrylat, Stearylacrylat, Behenylacrylat, und deren verzweigten Isomere, wie z.B. Isobutylacrylat, 2-Ethylhexylacrylat, 2-Ethylhexylmethacrylat, Isooctylacrylat, Isooctylmethacrylat.

Weitere einzusetzende Verbindungsklassen sind monofunktionelle Acrylate bzw. Methacrylate von überbrückten Cycloalkylalkoholen, bestehend aus zumindest 6 C-Atomen. Die Cycloalkylalkohole können auch substituiert sein, z.B. durch C-1-6-Alkylgruppen, Halogenatomen oder Cyanogruppen. Spezifische Beispiele sind Cyclohexylmethacrylate, Isobornylacrylat, Isobornylmethacrylate und 3,5-Dimethyladamantylacrylat.

In einer vorteilhaften Vorgehensweise werden Monomere eingesetzt, die polare Gruppen wie Carboxylreste, Sulfon- und Phosphonsäure, Hydroxyreste, Lactam und Lacton, N-substituiertes Amid, N-substituiertes Amin, Carbamat-, Epoxy-, Thiol-, Alkoxy-. Cyanreste, Ether oder ähnliches tragen.

Moderate basische Monomere sind z.B. N,N-Dialkylsubstituierte Amide, wie z.B. N,N-Dimethylacrylamid, N, N-Dimethylmethylmethacrylamid, N-tert.-Butylacrylamid, N-Vinylpyrrolidon, N-Vinyllactam, Dimethylaminoethylmethacrylat, Dimethylaminoethylacrylat, Diethylaminoethylmethacrylat, Diethylaminoethylacrylat, N-Methylolmethacrylamid, N-(Butoxymethyl)methacrylamid, N-Methylolacrylamid, N-(Ethoxymethyl)acrylamid, N-Isopropylacrylamid, wobei diese Aufzählung nicht abschließend zu verstehen ist.

Weitere bevorzugte Beispiele sind Hydroxyethylacrylat, Hydroxypropylacrylat, Hydroxyethylmethacrylat, Hydroxypropylmethacrylat, Allylalkohol, Maleinsäureanhydrid, itaconsäureanhydrid, Itaconsäure, Glyceridylmethacrylat, Phenoxyethylacrylat, Phenoxyethylmethacrylat, 2-Butoxyethylmethacrylat, 2-Butoxyethylacrylat, Cyanoethylmethacrylat, Cyanoethylacrylat, Glycerylmethacrylat, 6-Hydroxyhexylmethacrylat, Vinylessigsäure, Tetrahydrofufurylacrlyat, β-Acryloyloxypropionsäure, Trichloracrylsäure, Fumarsäure, Crotonsäure, Aconitsäure, Dimethylacrylsäure, wobei diese Aufzählung nicht abschließend zu verstehen ist.

In einer weiteren sehr bevorzugten Vorgehensweise werden als Monomere Vinylester, Vinylether, Vinylhalogenide, Vinylidenhalogenide, Vinylverbindungen mit aromatischen Cyden und Heterocyclen in $\alpha$-Stellung eingesetzt. Auch hier seien nicht ausschließlich einige Beispiele genannt: Vinylacetat, Vinylformamid, Vinylpyridin, Ethylvinylether, Vinylchlorid, Vinylidenchlorid und Acrylonitril.

Weiterhin werden in einer weiteren Vorgehensweise für die Haftklebemasse (b) Photoinitiatoren mit einer copolymerisierbaren Doppelbindung eingesetzt. Als Photoinitiatoren sind Norrish-I- und -II-Photoinitiatoren geeignet. Beispiele sind z.B. Benzoinacrylat und ein acryliertes Benzophenon der Fa. UCB (Ebecryl P 36®). Im Prinzip können alle dem Fachmann bekannten Photoinitiatoren copolymerisiert werden, die das Polymer über einen Radikalmechanismus unter UV-Bestrahlung vernetzen können. Ein Überblick über mögliche einsetzbare Photoinitiatoren die mit einer Doppelbindung funktionalisiert werden können, wird in Fouassier: "Photoinitiation, Photopolymerization and Photocuring: Fundamentals and Applications", Hanser-Verlag, München 1995, gegeben. Ergänzend wird Carroy et al. in "Chemistry and Technology of UV and EB Formulation for Coatings, Inks and Paints", Oldring (Hrsg.), 1994, SITA, London eingesetzt.

In einer weiteren bevorzugten Vorgehensweise werden zu den beschriebenen Comonomeren Monomere hinzugesetzt, die eine hohe statische Glasübergangstemperatur besitzen. Als Komponenten eigenen sich aromatische Vinylverbindungen, wie z.B. Styrol, wobei bevorzugt die aromatischen Kerne aus $C_4$- bis $C_{18}$-Bausteinen bestehen und auch Heteroatome enthalten können. Besonders bevorzugte Beispiele sind 4-Vinylpyridin, N-Vinylphthalimid, Methylstyrol, 3,4-Dimethoxystyrol, 4-Vinylbenzoesäure, Benzylacrylat, Benzylmethacrylat, Phenylacrylat, Phenylmethacrylat, t-Butylphenylacrylat, t-Butylphenylmethacrylat, 4-Biphenylacrylat und -methacrylat, 2-Naphthylacrylat und -methacrylat sowie Mischungen aus denjenigen Monomeren, wobei diese Aufzählung nicht abschließend zu verstehen ist.

Durch die Erhöhung des aromatischen Anteils steigt der Brechungsindex der Haftklebemasse an und die Streuung zwischen LCD-Glas und Haftklebemasse durch z.B. Fremdlicht wird minimiert.

Zur Weiterentwicklung können den Haftklebemassen Harze beigemischt sein. Als zuzusetzende klebrigmachende Harze sind die vorbekannten und in der Literatur beschriebenen Klebharze einsetzbar. Genannt seien stellvertretend die Pinen-, Inden- und Kolophoniumharze, deren disproportionierte, hydrierte, polymerisierte, veresterte Derivate und Salze, die aliphatischen und aromatischen Kohlenwasserstoffharze, Terpenharze und Terpenphenolharze sowie C5-, C9- sowie andere Kohlenwasserstoffharze. Beliebige Kombinationen dieser und weiterer Harze können eingesetzt werden, um die Eigenschaften der resultierenden Klebmasse wunschgemäß einzustellen. Im allgemeinen lassen sich alle mit dem entsprechenden Polyacrylat kompatiblen (löslichen) Harze einsetzen, insbesondere sei verwiesen auf die aliphatischen, aromatischen, alkylaromatischen Kohlenwasserstoffharze, Kohlenwasserstoffharze auf Basis reiner Monomere, hydrierte Kohlenwasserstoffharze, funktionelle Kohlenwasserstoffharze sowie Naturharze. Auf die Darstellung des Wissensstandes im "Handbook of Pressure Sensitive Adhesive Technology" von Donatas Satas (van

Nostrand, 1989) sei ausdrücklich hingewiesen.
Auch hier werden zur Verbesserung der Transparenz der Haftklebemasse (b) bevorzugt transparente und sehr gut mit dem Polymer verträgliche Harze eingesetzt. Hydrierte oder teilhydrierte Harze weisen häufig diese Eigenschaften auf.

Weiterhin können optional für die Weichmacher (Plastifizierungsmittel), weitere Füllstoffe (wie. z. B. Fasern, Ruß, Zinkoxid, Kreide, Voll- oder Hohlglaskugeln, Mikrokugeln aus anderen Materialien, Kieselsäure, Silikate), Keimbildner, elektrisch leitfähige Materialien, wie z.B. konjugierte Polymere, dotierte konjugierte Polymere, Metallpigmente, Metallpartikel, Metallsalze, Graphit, etc., Blähmittel, Compoundierungsmittel und/oder Alterungsschutzmittel, z.B. in Form von primären und sekundären Antioxidantien oder in Form von Lichtschutzmitteln zugesetzt sein. Für die Haftklebemasse (b) werden solche Additive bevorzugt nur in Mengen zugegeben werden, die die Reflektion dieser Seite nicht beeinflussen.

Zusätzlich können Vernetzer und Promotoren den Haftklebemassen (b) und (b') zur Vernetzung beigemischt werden. Geeignete Vernetzer für die Elektronenstrahlvernetzung und UV-Vemetzung sind beispielsweise bi- oder multifunktionelle Acrylate, bi- oder multifunktionelle Isocyanate (auch in blockierter Form) oder bi- oder multifunktionelle Epoxide. Weiterhin können auch thermisch aktivierbare Vernetzer, wie z.B. Lewis-Säure, Metallchelate oder multifunktionelle Isocyanate zugesetzt sein.

Zu einer optionalen Vernetzung mit UV-Licht können den Haftklebemassen (b) UVabsorbierende Photoinitiatoren zugesetzt werden. Nützliche Photoinitiatoren, welche sehr gut zu verwenden sind, sind Benzoinether, wie z. B. Benzoinmethylether und Benzoinisopropylether, substituierte Acetophenone, wie z. B. 2,2-Diethoxyacetophenon (erhältlich als Irgacure 651® von Fa. Ciba Geigy®), 2,2-Dimethoxy-2-phenyl-1-phenylethanon, Dimethoxyhydroxyacetophenon, substituierte $\alpha$-Ketole, wie z. B. 2-Methoxy-2-hydroxy-propiophenon, aromatische Sulfonylchloride, wie z. B. 2-Naphthyl sulfonylchlorid, und photoaktive Oxime, wie z. B. 1-Phenyl-1,2-propandion-2-(O-ethoxycarbonyl)oxim.

Die oben erwähnten und weitere einsetzbare Photoinitiatoren und andere vom Typ Norrish-I oder Norrish-II können folgenden Reste enthalten: Benzophenon-, Acetophenon-, Benzil-, Benzoin-, Hydroxyalkylphenon-, Phenylcyclohexylketon-, Anthrachinon-, Trimethylbenzoylphosphinoxid-, Methylthiophenylmorpholinketon-, Aminoketon-, Azobenzoin-, Thioxanthon-, Hexarylbisimidazol-, Triazin-, oder Fluorenon, wobei jeder dieser Reste zusätzlich mit einem oder mehreren Halogenatomen und/oder einer oder mehreren Alkyloxygruppen und/oder einer oder mehreren Aminogruppen oder Hydroxygruppen substituiert sein kann. Ein repräsentativer Überblick wird von Fouassier: "Photoinitiation, Photopolymerization and Photocuring: Fundamentals and Applications", Hanser-Verlag, München 1995, gegeben. Ergänzend kann Carroy et al. in "Chemistry and Technology of UV and EB Formulation for Coatings, Inks and Paints", Oldring (Hrsg.), 1994, SITA, London herangezogen werden.

Haftklebemassenschicht (c)

Die Haftklebemassenschicht (c) kann verschiedene Funktionen erfüllen. In einer bevorzugten Ausführungsform der Erfindung besitzt die Schicht (c) die Funktion der im Wesentlichen vollkommenen Absorption des Außenlichtes. Daher liegt in diesem Fall die Transmission des doppelseitigen Haftklebebandes in einem Wellenlängenbereich von 300 - 800 nm bevorzugt bei < 0,5 %, mehr bevorzugt bei < 0,1 %, äußerst bevorzugt bei < 0,01 %. In Rahmen dieser Erfindung wird dies durch eine schwarze Haftklebemassenschicht erreicht.

In einer sehr zu bevorzugenden erfinderischen Ausführungsform werden als schwarzfärbende Partikel Ruß und/oder Graphitpartikel in die Haftklebematrix eingemischt. Durch diese Additivierung wird bei sehr hohem Additivierungsgehalt (>20 Gew.-%), neben der im Wesentlichen vollständigen Lichtabsorption, zusätzlich eine elektrische Leitfähigkeit erzielt, so dass die erfinderischen doppelseitigen Haftklebebänder ebenfalls antistatische Eigenschaften aufweisen.
In einer bevorzugten Ausführungsform der Erfindung enthält die Haftklebemasse (c) zwischen 2 und 30 Gew.-% Ruß, mehr bevorzugt zwischen 5 und 20 Gew.-% Ruß und äußerst bevorzugt zwischen 8 und 15 Gew.-% Ruß. Der Ruß hat eine lichtabsorbierende Funktion. In einer bevorzugten Ausführung werden Rußpulver der Firma Degussa eingesetzt. Diese sind unter dem Handelsnamen Printex™ kommerziell erhältlich. Zur besseren Dispergierbarkeit in die Haftklebemasse werden besonders bevorzugt oxidativ nachbehandelte Ruße eingesetzt. Weiterhin kann es für die Haftklebemasse (c) von Vorteil sein, wenn neben Ruß Farbpigmente hinzugesetzt werden. So eignen sich als Zusätze z.B. Blaupigmente, wie z.B. Anilinschwarz BS890 der Firma Degussa. Weiterhin lassen sich als Zusätze noch Mattierungsmittel einsetzen.

Als Haftklebematrix können die dem Fachmann bekannten Haftklebemassensysteme eingesetzt werden. Als Haftklebemassensysteme sind z.B. geeignet Acrylat-, Naturkautschuk-, Synthesekautschuk-, Silikon- oder EVA-Massen. Weiterhin lassen sich die weiteren, dem Fachmann bekannten Haftklebemassen verarbeiten, wie sie z.B. im "Handbook" of Pressure Sensitive Adhesive Technology" von Donatas Satas (van Nostrand, New York 1989) aufgeführt sind.

Für Naturkautschukklebemassen wird der Naturkautschuk bevorzugt bis zu einem Molekulargewicht (Gewichtsmittel) nicht unter etwa 100.000 Dalton, bevorzugt nicht unter 500.000 Dalton gemahlen und additiviert.
Bei Kautschuk/Synthesekautschuk als Ausgangsmaterial für den Kleber sind weite Variationsmöglichkeiten gegeben. Eingesetzt werden können Naturkautschuke oder Synthesekautschuke oder beliebige Blends aus Naturkautschuken

und/oder Synthesekautschuken, wobei der Naturkautschuk oder die Naturkautschuke grundsätzlich aus allen erhältlichen Qualitäten wie zum Beispiel Crepe-, RSS-, ADS-, TSR- oder CV-Typen, je nach benötigtem Reinheits- und Viskositätsniveau, und der Synthesekautschuk oder die Synthesekautschuke aus der Gruppe der statistisch copolymerisierten Styrol-Butadien-Kautschuke (SBR), der Butadien-Kautschuke (BR), der synthetischen Polyisoprene (IR), der Butyl-Kautschuke (IIR), der halogenierten Butyl-Kautschuke (XIIR), der Acrylatkautschuke (ACM), der Etylen-Vinylacetat-Copolymeren (EVA) und der Polyurethane und/oder deren Blends gewählt werden können.
Weiterhin vorzugsweise können den Kautschuken zur Verbesserung der Verarbeitbarkeit thermoplastische Elastomere mit einem Gewichtsanteil von 10 bis 50 Gew.-% zugesetzt werden, und zwar bezogen auf den Gesamtelastomeranteil. Stellvertretend genannt seien an dieser Stelle vor allem die besonders verträglichen Styrol-Isopren-Styrol- (SIS) und Styrol-Butadien-Styrol (SBS) -Typen.

In einer erfinderisch bevorzugten Ausführungsform werden bevorzugt (Meth)acrylathaftklebemassen eingesetzt.

Erfindungsgemäß eingesetzte (Meth)Acrylathaftklebemassen, welche durch radikalische Polymerisation erhältlich sind, bestehen bevorzugt zu mindestens 50 Gew.-% auf zumindest einem acrylischen Monomer aus der Gruppe der Verbindungen der folgenden allgemeinen Formel:

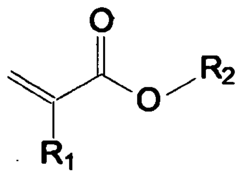

Dabei ist der Rest $R_1$ = H oder $CH_3$; und der Rest $R_2$ = H oder $CH_3$ oder wird gewählt aus der Gruppe beinhaltend die verzweigten und unverzweigten, gesättigten Alkylgruppen mit 1 - 30 Kohlenstoffatomen.

Die Monomere werden bevorzugt dermaßen gewählt, dass die resultierenden Polymere bei Raumtemperatur oder höheren Temperaturen als Haftklebemassen eingesetzt werden können, insbesondere derart, dass die resultierenden Polymere haftklebende Eigenschaften entsprechend des "Handbook of Pressure Sensitive Adhesive Technology" von Donatas Satas (van Nostrand, New York 1989) besitzen.

Für die erfinderische Ausführungsform ist es von besonderem Vorteil, wenn Haftklebematrix aus (c) identisch ist mit der Haftklebemasse (b) bzw. (b'). Durch die Verwendung dergleichen Haftklebemasse lässt sich das viskoelastische Profil der Schichten (c) und (b) bzw (b') verstärken, was wiederum zu einer bedeutenden Verbesserung der klebtechnischen Eigenschaften führt (dies ist ein besonderer Vorteil gegenüber mit schwarzen Lacken beschichteten Klebebändern oder mit schwarzen dicken Trägern ausgestatteten Klebebändern). Dies kann für Acrylathaftklebemassen durch eine bevorzugte Glasübergangstemperatur $T_G$ der Polymere von $T_G \leq 25$ °C erreicht werden. Entsprechend werden die Monomere sehr bevorzugt derart ausgesucht und die mengenmäßige Zusammensetzung der Monomermischung vorteilhaft derart gewählt, dass sich nach der Fox-Gleichung (G1) (vgl. T.G. Fox, Bull. Am. Phys. Soc. 1 (1956) 123) der gewünschte $T_G$-Wert für das Polymer ergibt.

$$\frac{1}{T_G} = \sum_n \frac{w_n}{T_{G,n}} \qquad \text{(G1)}$$

Hierin repräsentiert n die Laufzahl über die eingesetzten Monomere, $w_n$ den Massenanteil des jeweiligen Monomers n (Gew.-%) und $T_{G,n}$ die jeweilige Glasübergangstemperatur des Homopolymers aus den jeweiligen Monomeren n in K.

Ein weiterer Vorteil dieser Erfindung besteht darin, dass keine farbtragenden schwarzen Partikel auf das zu verklebende Substrat wandern können, da die transparenten Haftklebeschichten auf den Außenseiten des Haftklebebandes liegen. Dies ist ein besonders wichtiger Aspekt für die Repositionierbarkeit, da im Extremfall bei einer falschen Verklebung beim entsprechenden Ablösen schwarze Rückstände auf der LCD Folie verbleiben würden, und das gesamte Teil unbrauchbar damit wäre.

In einer besonders bevorzugten Ausführungsform weisen die Schichten (c) und (b) bzw. (b') die gleiche Haftklebematrix auf.
Ein weiterer Vorteil der identischen Haftklebematrix besteht in der reduzierten Neigung der Farbstoffe oder farbtragenden Partikel in die Klebemassenschichten (b) bzw. (b') zu migrieren. Es besteht hier nicht die Gefahr, dass die farbtragenden

Partikel - beispielsweise aufgrund einer unterschiedlichen Polarität - in einer Matrix besser löslich sind und dorthin migrieren.

Des Weiteren können durch den zweischichtigen Aufbau noch zusätzliche Funktionen implementiert werden. So lassen sich in Schicht (c) beispielsweise Blähmittel hinzusetzen, die die Vibrationseigenschaften anschließend erhöhen können, oder weitere Füllstoffe, die den Herstellungspreis des Klebebandes herabsetzen, ohne das die verklebende Haftklebemasseschicht (b) bzw. (b') dadurch beeinflusst werden würde.

<u>Haftklebemassenschicht (e)</u>

Die Haftklebemassenschicht (e) erfüllt im Rahmen dieser Erfindung die Funktion der Lichtreflektion des Außenlichtes.
Die Reflektion wird nach DIN Norm 5063 Teil 3 durchgeführt. Als Messgerät wird eine Ulbrechtsche Kugel Typ LMT eingesetzt. Der Reflektionsgrad wird als Summe aus gerichteten und gestreuten Lichtanteilen in % angegeben und soll größer 65 % betragen. Zur Erzielung dieses Reflektionswertes werden der Haftklebemassenschicht (e) Farbpigmente oder farbtragende Partikel hinzugegeben, aus denen eine Weißfärbung resultiert. Als Weißpigmente lassen sich z.B. Titandioxid, Bariumsulfat, Calciumcarbonat, Zinkoxid, Zinksulfid und Bleicarbonat einsetzen. Im Falle einer Einfärbung durch Titandioxidzusätze lassen sich sowohl Pigmente auf Basis von Anatas- als auch von Rutilstrukturen einsetzen. Weiterhin lassen sich diese Pigmente auch in Kombination mit organischen Pigmenten einsetzen. Die Anteile betragen bevorzugt zwischen 3 und 40 Gew.-%, sehr bevorzugt zwischen 5 und 20 Gew.-%.

Die Pigmente oder Partikel sollten aber bevorzugt kleiner im Durchmesser sein als die finale Schichtdicke der Haftklebemassenschicht (e).

Als Haftklebematrix können alle dem Fachmann bekannten Haftklebemassensysteme eingesetzt werden. Als Haftklebemassensysteme sind z.B. geeignet Acrylat-, Naturkautschuk-, Synthesekautschuk-, Silikon- oder EVA-Massen. Natürlich lassen sich aber auch alle weiteren, dem Fachmann bekannten Haftklebemassen verarbeiten, wie sie z.B. im "Handbook of Pressure Sensitive Adhesive Technology" von Donatas Satas (van Nostrand, New York 1989) aufgeführt sind. Die Matrix der Haftklebemassenschicht (e) wird erfindungsgemäß derart gewählt, dass sie mit derjenigen der Haftklebeschicht auf der Oberseite (Schicht b) identisch ist.

Für die erfinderische Ausführungsform ist es von besonderem Vorteil, dass die Haftklebematrix der Schicht (e) identisch ist mit der Haftklebemasse für die Schichten (b) und gegebenenfalls der Schicht (b'). Durch die Verwendung der gleichen Haftklebemasse lässt sich das viskoelastische Profil der Schichten (e) und (b) bzw. (b') verstärken, was wiederum zu einer bedeutenden Verbesserung der klebtechnischen Eigenschaften führt (ein besonderer Vorteil gegenüber mit weißen Lacken beschichteten Klebebändern oder mit weißen dicken Trägern ausgestatteten Klebebändern), Dies kann für Acrylathaftklebemassen durch einen bevorzugten Glasübergangstemperatur $T_G$ der Polymere von $T_G \leq$ 25 °C erreicht werden. Entsprechend werden die Monomere sehr bevorzugt derart ausgesucht und die mengenmäßige Zusammensetzung der Monomermischung vorteilhaft derart gewählt, dass sich nach der Fox-Gleichung (G1) (vgl. T.G. Fox, Bull. Am. Phys. Soc. 1 (1956) 123) der gewünschte $T_G$-Wert für das Polymer ergibt.

$$\frac{1}{T_G} = \sum_n \frac{w_n}{T_{G,n}} \qquad \text{(G1)}$$

Hierin repräsentiert n die Laufzahl über die eingesetzten Monomere, $w_n$ den Massenanteil des jeweiligen Monomers n (Gew.-%) und $T_{G,n}$ die jeweilige Glasübergangstemperatur des Homopolymers aus den jeweiligen Monomeren n in K.

Ein weiterer Vorteil dieser Erfindung besteht darin, dass keine farbtragenden weißen Partikel, auf das zu verklebende Substrat wandern können, da die transparenten Haftklebeschichten auf den Außenseiten des Haftklebebandes liegen. Dies ist ein besonders wichtiger Aspekt für die Repositionierbarkeit, da im Extremfall bei einer falschen Verklebung beim entsprechenden Ablösen weiße Rückstände auf der LCD-Folie verbleiben würden, und das gesamte Teil unbrauchbar damit wäre. In einer besonders bevorzugten Ausführungsform weisen die Schichten (e) und (b) bzw. (b') die gleiche Haftklebematrix auf.

Ein weiterer Vorteil der identischen Haftklebematrix besteht in der reduzierten Neigung der Farbstoffe oder farbtragenden Partikel, in die Klebemassenschichten (b) bzw. (b') zu migrieren. Es besteht somit nicht die Gefahr, dass die farbtragenden Partikel - beispielsweise aufgrund einer unterschiedlichen Polarität - in einer Matrix besser löslich sind und dorthin migrieren.

Des Weiteren können durch den zweischichtigen Aufbau noch zusätzliche Funktionen implementiert werden. So lassen sich in Schicht (e) beispielsweise Blähmittel hinzusetzen, die die Vibrationseigenschaften anschließend erhöhen können, oder weitere Füllstoffe, die den Herstellungspreis des Klebebandes herabsetzen, ohne das die verklebende Haftklebemasseschicht (b) bzw. (b') dadurch beeinflusst werden würde.

**Herstellverfahren für die Acrylathaftklebemassen**

Zur Polymerisation werden die Monomere dermaßen gewählt, dass die resultierenden Polymere bei Raumtemperatur oder höheren Temperaturen als Haftklebemassen eingesetzt werden können, insbesondere derart, dass die resultierenden Polymere haftklebende Eigenschaften entsprechend des "Handbook of Pressure Sensitive Adhesive Technology" von Donatas Satas (van Nostrand, New York 1989) besitzen.

Zur Erzielung einer für Haftklebemassen bevorzugten Glasübergangstemperatur $T_G$ der Polymere von $T_G \leq 25$ °C werden entsprechend dem vorstehend gesagten die Monomere sehr bevorzugt derart ausgesucht und die mengenmäßige Zusammensetzung der Monomermischung vorteilhaft derart gewählt, dass sich nach der ***Fox***-Gleichung (G1) (vgl. T.G. Fox, Bull. Am. Phys. Soc. 1 (1956) 123) der gewünschte $T_G$-Wert für das Polymer ergibt.

$$\frac{1}{T_G} = \sum_n \frac{w_n}{T_{G,n}} \qquad \text{(G1)}$$

Hierin repräsentiert n die Laufzahl über, die eingesetzten Monomere, $w_n$ den Massenanteil des jeweiligen Monomers n (Gew.-%) und $T_{G,n}$ die jeweilige Glasübergangstemperatur des Homopolymers aus den jeweiligen Monomeren n in K.

Zur Herstellung der Poly(meth)acrylathaftklebemassen werden vorteilhaft konventionelle radikalische Polymerisationen durchgeführt. Für die radikalisch verlaufenden Polymerisationen werden bevorzugt Initiatorsysteme eingesetzt, die zusätzlich weitere radikalische Initiatoren zur Polymerisation enthalten, insbesondere thermisch zerfallende radikalbildende Azo- oder Peroxo-Initiatoren. Prinzipiell eignen sich jedoch alle für Acrylate dem Fachmann geläufigen, üblichen Initiatoren. Die Produktion von C-zentrierten Radikalen ist im Houben Weyl, Methoden der Organischen Chemie, Vol. E 19a, S. 60 - 147 beschrieben. Diese Methoden werden in bevorzugter Weise in Analogie angewendet.
Beispiele für Radikalquellen sind Peroxide, Hydroperoxide und Azoverbindungen, als einige nicht ausschließliche Beispiele für typische Radikalinitiatoren seien hier genannt Kaliumperoxodisulfat, Dibenzoylperoxid, Cumolhydroperoxid, Cyclohexanonperoxid, Di-tert.-butylperoxid, Azodiisosäurebutyronitril, Cyclohexylsulfonylacetylperoxid, Diisopropylpercarbonat, tert.-Butylperoctoat, Benzpinacol. In einer sehr bevorzugten Ausführungsform wird als radikalischer Initiator 1,1'-Azo-bis-(cyclohexancarbonsäurenitril) (Vazo 88™ der Fa. DuPont) oder Azoisobutyronitril (AIBN) verwendet.

Die gewichtsmittleren Molekulargewichte $M_w$ der bei der radikalischen Polymerisation entstehenden Haftklebemassen werden sehr bevorzugt derart gewählt; dass sie in einem Bereich von 200.000 bis 4.000.000 g/mol liegen; speziell für die weitere Verwendung als elektrisch-leitfähiger Schmeizhaftkleber mit Rückstellvermögen werden Haftklebemassen mit mittleren Molekulargewichten $M_w$ von 400.000 bis 1.400.000 g/mol hergestellt. Die Bestimmung des mittleren Molekulargewichtes erfolgt über Größenausschlusschromatographie (GPC) oder Matrix-unterstützte Laser-Desorption/Ionisations-Massenspektrometrie (MALDI-MS).

Die Polymerisation kann in Substanz, in Gegenwart eines oder mehrerer organischer Lösungsmittel, in Gegenwart von Wasser oder in Gemischen aus organischen Lösungsmitteln und Wasser durchgeführt werden. Es wird dabei angestrebt, die verwendete Lösungsmittelmenge so gering wie möglich zu halten. Geeignete organische Lösungsmittel sind reine Alkane (z.B. Hexan, Heptan, Octan, Isooctan), aromatische Kohlenwasserstoffe (z.B. Benzol, Toluol, Xylol), Ester (z.B. Essigsäureethylester, Essigsäurepropyl-, -butyl- oder -hexylester), halogenierte Kohlenwasserstoffe (z.B. Chlorbenzol), Alkanole (z.B. Methanol, Ethanol, Ethylenglycol, Ethylenglycolmonomethylether) und Ether (z.B. Diethylether, Dibutylether) oder Gemische davon. Die wässrigen Polymerisationsreaktionen können mit einem mit Wasser mischbaren oder hydrophilen Colösungsmittel versetzt werden, um zu gewährleisten, dass das Reaktionsgemisch während des Monomerumsatzes in Form einer homogenen Phase vorliegt. Vorteilhaft verwendbare Colösungsmittel für die vorliegende Erfindung werden gewählt aus der folgenden Gruppe, bestehend aus aliphatischen Alkoholen, Glycolen, Ethern, Glycolethern, Pyrrolidinen, N-Alkylpyrrolidinonen, N-Alkylpyrrolidonen, Polyethylenglycolen, Polypropylenglycolen, Amiden, Carbonsäuren und Salzen davon, Estern, Organosulfiden, Sulfoxiden, Sulfonen, Alkoholderivaten, Hydroxyetherderivaten, Aminoalkoholen, Ketonen und dergleichen, sowie Derivaten und Gemischen davon.

Die Polymerisationszeit beträgt - je nach Umsatz und Temperatur - zwischen 2 und 72 Stunden. Je höher die Reaktionstemperatur gewählt werden kann, das heißt, je höher die thermische Stabilität des Reaktionsgemisches ist, desto geringer kann die Reaktionsdauer gewählt werden.

Zur Initiierung der Polymerisation ist für die thermisch zerfallenden Initiatoren der Eintrag von Wärme essentiell.

Die Polymerisation kann für die thermisch zerfallenden Initiatoren durch Erwärmen auf 50 bis 160°C, je nach Initiatortyp, initiiert werden.

Für die Herstellung kann es auch von Vorteil sein, die (Meth)acrylathaftklebemassen in Substanz zu polymerisieren. Hier eignet sich insbesondere die Präpolymerisationstechnik. Die Polymerisation wird mit UV-Licht initiiert, aber nur zu einem geringen Umsatz ca. 10 - 30 % geführt Anschließend kann dieser Polymersirup z.B. in Folien eingeschweißt werden (im einfachsten Fall Eiswürfel) und dann in Wasser zu hohem Umsatz durchpolymerisiert. Diese Pellets lassen sich dann als Acrylatschmelzkleber einsetzen, wobei für den Aufschmelzvorgang besonders bevorzugt Folienmaterialien eingesetzt werden, die mit dem Polyacrylat kompatibel sind. Auch für diese Präparationsmethode lassen sich die thermisch-leitfähigen Materialzusätze vor oder nach der Polymerisation zusetzen.

Ein anderes vorteilhaftes Herstellungsverfahren für die Poly(meth)acrylathaftklebemassen ist die anionische Polymerisation. Hier werden als Reaktionsmedium bevorzugt inerte Lösungsmittel verwendet, wie z.B. aliphatische und cycloaliphatische Kohlenwasserstoffe, oder auch aromatische Kohlenwasserstoffe.

Das lebende Polymer wird in diesem Fall im Allgemeinen durch die Struktur $P_L(A)$-Me repräsentiert, wobei Me ein Metall der Gruppe 1, wie z.B. Lithium, Natrium oder Kalium, und $P_L(A)$ ein wachsendes Polymer aus den Acrylatmonomeren ist. Die Molmasse des herzustellenden Polymers wird durch das Verhältnis von Initiatorkonzentration zu Monomerkonzentration kontrolliert. Als geeignete Polymerisationsinitiatoren eignen sich z. B. n-Propyllithium, n-Butyllithium, sec-Butyllithium, 2-Naphthyllithium, Cyclohexyllithium oder Octyllithium, wobei diese Aufzählung nicht den Anspruch auf Vollständigkeit besitzt. Ferner sind Initiatoren auf Basis von Samarium-Komplexen zur Polymerisation von Acrylaten bekannt (Macromolecules, 1995, 28, 7886) und hier einsetzbar.

Weiterhin lassen sich auch difunktionelle Initiatoren einsetzen, wie beispielsweise 1,1,4,4-Tetraphenyl-1,4-dilithiobutan oder 1,1,4,4-Tetraphenyl-1,4-dilithioisobutan. Coinitiatoren lassen sich ebenfalls einsetzen. Geeignete Coinitiatoren sind unter anderem Lithiumhalogenide, Alkalimetallalkoxide oder Alkylaluminium-Verbindungen. In einer sehr bevorzugten Version sind die Liganden und Coinitiatoren so gewählt, dass Acrylatmonomere, wie z.B. n-Butylacrylat und 2-Ethylhexylacrylat, direkt polymerisiert werden können und nicht im Polymer durch eine Umesterung mit dem entsprechenden Alkohol generiert werden müssen.

Zur Herstellung von Poly(meth)acrylathaltklebemassen mit einer engen Molekulargewichtsverteilung eignen sich auch kontrollierte radikalische Polymerisationsmethoden. Zur Polymerisation wird dann bevorzugt ein Kontrollreagenz der allgemeinen Formel eingesetzt:

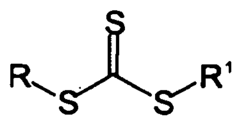

(I)

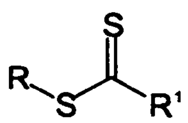

(II)

worin R und $R^1$ unabhängig voneinander gewählt oder gleich sind

- verzweigte und unverzweigte $C_1$- bis $C_{18}$-Alkylreste; $C_3$- bis $C_{18}$-Alkenylreste; $C_3$-bis $C_{18}$-Alkinylreste;
- $C_1$- bis $C_{18}$-Alkxoyreste
- durch zumindest eine OH-Gruppe oder ein Halogenatom oder einen Silylether substituierte $C_1$- bis $C_{18}$-Alkylreste; $C_3$- bis $C_{18}$-Alkenylreste; $C_3$- bis $C_{18}$-Alkinylreste;
- $C_2C_{18}$-Hetero- Alkylreste mit mindestens einem O- Atom und/ oder einer NR*- Gruppe in der Kohlenstoffkette, wobei R* ein beliebiger (insbesondere organischer) Rest sein kann,
- mit zumindest einer Estergruppe, Amingruppe, Carbonatgruppe, Cyanogruppe, Isocyanogruppe und/oder Epoxidgruppe und/oder mit Schwefel substituierte $C_1$-$C_{18}$-Alkylreste, $C_3$-$C_{18}$-Alkenylreste, $C_3$-$C_{18}$-Alkinylreste;
- $C_3$-$C_{12}$-Cycloalkylreste
- $C_6$-$C_{18}$- Aryl- oder Benzylreste
- Wasserstoff

darstellen.

Kontrollreagenzien des Typs (I) bestehen bevorzugt aus folgenden weiter eingeschränkten Verbindungen:

Halogenatome sind hierbei bevorzugt F, Cl, Br oder I, mehr bevorzugt Cl und Br. Als Alkyl-, Alkenyl- und Alkinylreste in den verschiedenen Substituenten eignen sich hervorragend sowohl lineare als auch verzweigte Ketten.

Beispiele für Alkylreste, welche 1 bis 18 Kohlenstoffatome enthalten, sind Methyl, Ethyl, Propyl, Isopropyl, Butyl, Isobutyl, t-Butyl, Pentyl, 2-Pentyl, Hexyl, Heptyl, Octyl, 2-Ethylhexyl, t-Octyl, Nonyl, Decyl, Undecyl, Tridecyl, Tetradecyl, Hexadecyl und Octadecyl.
Beispiele für Alkenylreste mit 3 bis 18 Kohlenstoffatomen sind Propenyl, 2-Butenyl, 3-Butenyl, Isobutenyl, n-2,4-Pentadienyl, 3-Methyl-2-butenyl, n-2-Octenyl, n-2-Dodecenyl, Isododecenyl und Oleyl.
Beispiele für Alkinyl mit 3 bis 18 Kohlenstoffatomen sind Propinyl, 2-Butinyl, 3-Butinyl, n-2-Octinyl und n-2-Octadecinyl.
Beispiele für Hydroxy-substituierte Alkylreste sind Hydroxypropyl, Hydroxybutyl oder Hydroxyhexyl.
Beispiele für Halogen-substituierte Alkylreste sind Dichlorobutyl, Monobromobutyl oder Trichlorohexyl.
Ein geeigneter $C_2$-$C_{18}$-Hetero-Alkylrest mit mindestens einem O-Atom in der Kohlenstoffkette ist beispielsweise $-CH_2-CH_2-O-CH_2-CH_3$.
Als $C_3$-$C_{12}$-Cycloalkylreste dienen beispielsweise Cyclopropyl, Cyclopentyl, Cyclohexyl oder Trimethylcyclohexyl.
Als $C_8$-$C_{18}$-Arylreste dienen beispielsweise Phenyl, Naphthyl, Benzyl, 4-tert.-Butylbenzyl- oder weitere substituierte Phenyl, wie z.B. Ethyl, Toluol, Xylol, Mesitylen, Isopropylbenzol, Dichlorobenzol oder Bromtoluol.
Die vorstehenden Auflistungen dienen nur als Beispiele für die jeweiligen Verbindungsgruppen und besitzen keinen Anspruch auf Vollständigkeit.

Weiterhin sind auch Verbindungen der folgenden Typen als Kontrollreagenzien einsetzbar

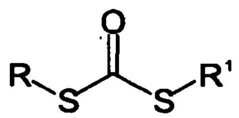

(III)

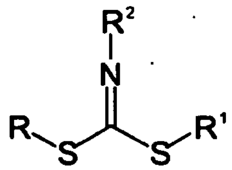

(IV)

wobei $R^2$ ebenfalls unabhängig von R und $R^1$ aus der oben aufgeführten Gruppe für diese Reste gewählt werden kann.

Beim konventionellen 'RAFT-Prozeß' wird zumeist nur bis zu geringen Umsätzen polymerisiert (WO 98/01478 A1), um möglichst enge Molekulargewichtsverteilungen zu realisieren. Durch die geringen Umsätze lassen sich diese Polymere aber nicht als Haftklebemassen und insbesondere nicht als Schmelzhaftkleber einsetzen, da der hohe Anteil an Restmonomeren die klebtechnischen Eigenschaften negativ beeinflusst, die Restmonomere im Aufkonzentrationsprozess das Lösemittelrecyclat verunreinigen und die entsprechenden Selbstklebebänder ein sehr hohes Ausgasungsverhalten zeigen würden. Um diesen Nachteil niedriger Umsätze zu umgehen, wird in einer besonders bevorzugten Vorgehensweise die Polymerisation mehrfach initiiert.

Als weitere kontrollierte radikalische Polymerisationsmethode können Nitroxid-gesteuerte Polymerisationen durchgeführt werden. Zur Radikalstabilisierung werden in günstiger Vorgehensweise Nitroxide des Typs (Va) oder (Vb) eingesetzt:

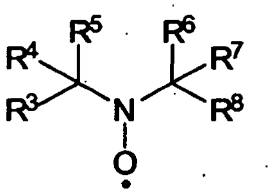

(Va)

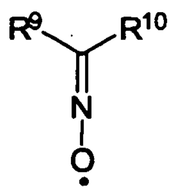

(Vb)

wobei $R^3$, $R^4$, $R^5$, $R^6$, $R^7$ $R^8$, $R^9$, $R^{10}$ unabhängig voneinander folgende Verbindungen oder Atome bedeuten:

i) Halogenide, wie z.B. Chlor, Brom oder Iod
ii) lineare, verzweigte, cyclische und heterocyclische Kohlenwasserstoffe mit 1 bis 20 Kohlenstoffatomen, die gesättigt, ungesättigt oder aromatisch sein können,
iii) Ester -COOR$^{11}$, Alkoxide -OR$^{12}$ und/oder Phosphonate -PO(OR$^{13}$)$_2$, wobei R$^{11}$, R$^{12}$ oder R$^{13}$ für Reste aus der Gruppe ii) stehen.

Verbindungen der Formeln (Va) oder (Vb) können auch an Polymerketten jeglicher Art gebunden sein (vorrangig in dem Sinne, dass zumindest einer der oben genannten Reste eine derartige Polymerkette darstellt) und somit zum Aufbau von Polyacrylathaftklebemassen genutzt werden.
Mehr bevorzugt werden kontrollierte Regler für die Polymerisation von Verbindungen des Typs eingesetzt:

- 2,2,5,5-Tetramethyl-1-pyrrolidinyloxyl (PROXYL), 3-Carbamoyl-PROXYL, 2,2-dimethyl-4,5-cyclohexyl-PROXYL, 3-oxo-PROXYL, 3-Hydroxylimine-PROXYL, 3-Aminomethyl-PROXYL, 3-Methoxy-PROXYL, 3-t-Butyl-PROXYL, 3,4-Di-t-butyl-PROXYL
- 2,2,6,6-Tetramethyl-1-piperidinyloxyl (TEMPO), 4-Benzoyloxy-TEMPO, 4-Methoxy-TEMPO, 4-Chloro-TEMPO, 4-Hydroxy-TEMPO, 4-Oxo-TEMPO, 4-Amino-TEMPO, 2,2,6,6,-Tetraethyl-1-piperidinyloxyl, 2,2,6-Trimethyl-6-ethyl-1-piperidinyloxyl
- N-tert.-Butyl-1-phenyl-2-methyl propyl Nitroxid
- N-tert.-Butyl-1-(2-naphtyl)-2-methyl propyl Nitroxid
- N-tert.-Butyl-1-diethylphosphono-2,2-dimethyl propyl Nitroxid
- N-tert.-Butyl-1-dibenzylphosphono-2,2-dimethyl propyl Nitroxid
- N-(1-Phenyl-2-methyl propyl)-1-diethylphosphono-1-methyl ethyl Nitroxid
- Di-tert.-Butylnitroxid
- Diphenylnitroxid
- tert.-Butyl-tert.-amyl Nitroxid

Eine Reihe weiterer Polymerisationsmethoden, nach denen die Haftklebemassen in alternativer Vorgehensweise hergestellt werden können, lassen sich aus dem Stand der Technik wählen:
US 4,581,429 A offenbart ein kontrolliert radikalisches Polymerisationsverfahren, das als Initiator eine Verbindung der Formel R'R"N-O-Y anwendet, worin Y eine freie radikalische Spezies ist, die ungesättigte Monomere polymerisieren kann. Die Reaktionen weisen aber im Allgemeinen geringe Umsätze auf. Besonders problematisch ist die Polymerisation von Acrylaten, die nur zu sehr geringen Ausbeuten und Molmassen abläuft. WO 98/13392 A1 beschreibt offenkettige Alkoxyaminverbindungen, die ein symmetrisches Substitutionsmuster aufweisen. EP 735 052 A1 offenbart ein Verfahren zur Herstellung thermoplastischer Elastomere mit engen Molmassenverteilungen. WO 96/24620 A1 beschreibt ein Polymerisationsverfahren, bei dem sehr spezielle Radikalverbindungen wie z. B. phosphorhaltige Nitroxide, die auf Imidazolidin basieren, eingesetzt werden. WO 98/44008 A1 offenbart spezielle Nitroxyle, die auf Morpholinen, Piperazinonen und Piperazindionen basieren. DE 199 49 352 A1 beschreibt heterozyklische Alkoxyamine als Regulatoren in kontrolliert radikalischen Polymerisationen. Entsprechende Weiterentwicklungen der Alkoxyamine bzw. der korrespondierenden freien Nitroxide verbessern die Effizienz zur Herstellung von Polyacrylaten.

Als weitere kontrollierte Polymerisationsmethode lässt sich in vorteilhafter Weise zur Synthese der Polyacrylathaftklebemassen die Atom Transfer Radical Polymerization (ATRP) einsetzen, wobei als Initiator bevorzugt monofunktionelle oder difunktionelle sekundäre oder tertiäre Halogenide und zur Abstraktion des(r) Halogenids(e) Cu-, Ni-, Fe-, Pd-, Pt-, Ru-, Os-, Rh-, Co-, Ir-, Ag- oder Au-Komplexe (EP 0 824 111 A1; EP 826 698 A1; EP 824 110 A1; EP 841 346 A1; EP 850 957 A1) eingesetzt werden. Die unterschiedlichen Möglichkeiten der ATRP sind ferner in den Schriften US 5,945,491 A, US 5,854,364 A und US 5,789,487 A beschrieben.

Beschichtungsverfahren, Ausrüstung des Trägermaterials

Zur Herstellung wird in einer bevorzugten Ausführungsform die Haftklebemasse aus Lösung auf das Trägermaterial beschichtet. Zur Steigerung der Verankerung der Haftklebemasse ist es vorteilhaft, wenn die Schichten (a) bzw. (a') vorbehandelt werden. So kann z.B. mit Corona oder mit Plasma vorbehandelt werden, es kann aus der Schmelze oder aus Lösung ein Primer aufgetragen werden oder es kann chemisch geatzt werden. Insbesondere bei Beschichtung auf schwarzen, weißen oder metallischen Schichten sollte aber die Corona-Leistung minimiert werden, da ansonsten Pinholes in die Folie hinein gebrannt werden. Für die Beschichtung der Haftklebemasse aus Lösung wird über Wärmezufuhr z.B. in einem Trockenkanal das Lösemittel entfernt und gegebenenfalls die Vernetzungsreaktion initiiert.

Die oben beschriebenen Polymere können weiterhin auch als Hotmett-Systeme (also aus der Schmelze) beschichtet werden. Für das Herstellungsverfahren kann es daher erforderlich sein, das Lösemittel von der Haftklebemasse zu entfernen. Hier können im Prinzip alle dem Fachmann bekannten Verfahren eingesetzt werden. Ein sehr bevorzugtes Verfahren ist die Aufkonzentration über einen Ein- oder Doppelschneckenextruder. Der Doppelschneckenextruder kann gleich- oder gegenläufig betrieben werden. Das Lösemittel oder Wasser wird bevorzugt über mehrere Vakuumstufen

abdestilliert. Zudem wird je nach Destillationstemperatur des Lösemittels gegengeheizt. Die Restlösemittelanteile betragen bevorzugt < 1 %, mehr bevorzugt < 0,5 % und sehr bevorzugt < 0,2 %. Der Hotmelt wird aus der Schmelze weiterverarbeitet.

Weiterhin kann der Doppelschneckenextruder auch zum Compoundieren mit Ruß oder den weißen Farbpigmenten genutzt werden.

Zur Beschichtung als Hotmelt können unterschiedliche Beschichtungsverfahren herangezogen werden. In einer Ausführung werden die Haftklebemassen über ein Walzenbeschichtungsverfahren beschichtet. Unterschiedliche in diesem Zusammenhang anwendbare Walzenbeschichtungsverfahren sind im "Handbook of Pressure Sensitive Adhesive Technology" von Donatas Satas (van Nostrand, New York 1989) beschrieben. In einer weiteren Ausführung wird über eine Schmelzdüse beschichtet. In einem weiteren bevorzugten Verfahren wird durch Extrusion beschichtet. Die Extrusionsbeschichtung wird bevorzugt mit einer Extrusionsdüse vorgenommen. Die verwendeten Extrusionsdüsen können vorteilhaft aus einer der drei folgenden Kategorien stammen: T-Düse, Fischschwanz-Düse und Bügel-Düse. Die einzelnen Typen unterscheiden sich durch die Gestalt ihres Fließkanals.
Durch die Beschichtung können die Haftklebemassen auch eine Orientierung erfahren.

Für die Herstellung der zweischichtigen Haftklebemasse sind drei verschiedene Verfahren besonders zu bevorzugen:

a) Coextrusion
Hier werden die Schichten (b) bzw. (b') und (c) sowie (b) bzw. (b') und (e) gleichzeitig aus einer Coextrusionsdüse beschichtet, so dass die Haftklebemassen in einem Schritt aufgebracht werden können. Dies ist insbesondere kein Problem, wenn die Viskositäten der Haftklebemassen (b) bzw. (b') und (c) sowie (b) bzw. (b') und (e) vergleichbar sind.
b) nachfolgende Beschichtung aus Lösung
Hier wird zunächst die Haftklebemasse (c) bzw. (e) aus Lösung auf den Träger aufgebracht getrocknet und anschließend die Haftklebemasse (b) bzw. (b') aus Lösung in einem zweiten Strich aufgebracht. Dieser Prozess kann in zwei Arbeitsgängen ablaufen oder in einem Maschinenarbeitsgang, wobei dann mit einem Auftragswerk (c) bzw. (e) aus Lösung aufgebracht wird, in einem kurzen Trockenkanal getrocknet wird und dann (b) bzw. (b') wieder mit einem Auftragswerk aufgebracht wird und dann in einem längeren Trockenkanal vollständig getrocknet wird.
c) simultane Beschichtung aus Lösung

Hier wird mit einer Düse und zwei Kanälen aus Lösung aufgetragen, wobei beide Schichten (b) bzw. (b') und (c) sowie (b) bzw. (b') und (e) nahezu gleichzeitig aufgetragen werden und dann in einem Schritt simultan getrocknet werden.

Weiterhin kann es erforderlich sein, dass die Haftklebemasse vernetzt wird. In einer bevorzugten Ausführung wird thermisch, mit UV- und/oder Elektronenstrahlung vernetzt.

Zur UV-Vemetzung wird mittels kurzwelliger ultravioletter Bestrahlung in einem Wellenlängenbereich von 200 bis 400 nm, je nach verwendetem UV-Photoinitiator, bestrahlt, insbesondere unter Verwendung von Quecksilber-Hochdruck- oder -Mitteldruck-Lampen bei einer Leistung von 80 bis 240 W/cm. Die Bestrahlungsintensität wird der jeweiligen Quantenausbeute des UV-Photoinitiators und dem einzustellenden Vernetzungsgrad angepasst.

Weiterhin werden die Haftklebemassen in einer vorteilhaften Ausführungsform der Erfindung mit Elektronenstrahlen vernetzt. Typische Bestrahlungsvorrichtungen, die vorteilhaft eingesetzt werden, sind Linearkathodensysteme, Scannersysteme bzw. Segmentkathodensysteme, sofern es sich um Elektronenstrahlbeschleuniger handelt. Eine ausführliche Beschreibung des Stands der Technik und die wichtigsten Verfahrensparameter findet man bei Skelhome, Electron Beam Processing, in Chemistry and Technology of UV and EB formulation for Coatings, Inks and Paints, Vol. 1, 1991, SITA, London. Die typischen Beschleunigungsspannungen liegen im Bereich zwischen 50 kV und 500 kV, vorzugsweise 80 kV und 300 kV. Die angewandten Streudosen bewegen sich zwischen 5 und 150 kGy, insbesondere zwischen 20 und 100 kGy.
Es können auch beide Vemetzungsverfahren angewendet werden oder andere Verfahren, die hochenergetische Bestrahlung ermöglichen.

<u>Metallische Schicht (d)</u>

Für die Herstellung einer lichtabsorbierenden Seite geht man vorteilhaft so vor, dass die Folienschicht (a) mit einem Metall, z.B. Aluminium oder Silber, bedampft wird.
Um besonders hervorragende lichtabsorbierende Eigenschaften zu erreichen, ist es sehr von Vorteil, den Sputterprozess zur Bedampfung so zu steuern, dass das Aluminium oder Silber sehr gleichmäßig aufgetragen ist, um Pinholes zu vermeiden.
Dies wird in einer sehr bevorzugten Ausführung durch eine plasmavorbehandelte PET-Folie erreicht, die in einem Arbeitschritt mit Aluminium bedampft wird. Durch den Einsatz der metallischen Schicht (d) wird die Transmission des

Lichtes durch das Trägermaterial vermindert bzw. stark herabgesetzt sowie Oberflächenrauhigkeiten der Trägerfolie kompensiert.

Weiterhin ist Gegenstand der Erfindung die Verwendung der erfinderischen doppelseitigen Haftklebebänder zur Verklebung oder Herstellung von LC-Displays. Für die Verwendung als Haftklebeband können die doppelseitigen Haftklebebänder mit einem oder zwei Trennfolien oder Trennpapieren abgedeckt sein. In einer bevorzugten Ausführungsform werden silikonisierte oder fluorierte Folien oder Papiere, wie z.B. Glassine, HPDE oder LDPE gecoatete Papiere eingesetzt, die wiederum mit einer Releaseschicht basierend auf Silikonen oder fluorierten Polymeren versehen sind. In einer besonders bevorzugten Ausführungsform werden silikonisierte PET Folien als Releaseliner eingesetzt. Insbesondere vorteilhaft sind die erfindungsgemäßen Haftklebebänder zur Verklebung von Leuchtdioden (Light Emitting Diode, LED) als Lichtquelle mit dem LCD-Modul geeignet.

**Beispiele**

Die Erfindung wird im Folgenden beschrieben, ohne sich durch die Wahl der Beispiele unnötig beschränken zu wollen.

Folgende Prüfmethoden wurden angewendet.

Prüfmethoden

A. Transmission

Die Transmission wurde im Wellenlängenbereich von 190 bis 900 nm mit einem Uvikon 923 der Fa. Biotek Kontron gemessen. Die Messung wird bei 23°C durchgeführt. Die Absolute Transmission wird als Wert bei 550 nm in % angegeben bezogen auf die vollständige Lichtabsorption (Transmission 0 % = kein Lichtdurchlass; Transmission 100 % = vollständiger Lichtdurchlass).

B. Pinholes

Eine handelsübliche sehr starke Lichtquelle (z.B. Overheadprojektor Typ Liesegangtrainer 400 KC Typ 649, Halogenlampe 36 V, 400 W) wird komplett lichtdicht mit einer Maske abgedeckt. Diese Maske enthält in der Mitte eine kreisrunde Öffnung mit einem Durchmesser von 5 cm. Auf diese kreisrunde Öffnung wird das doppelseitige LCD-Klebeband aufgelegt. In vollständig abgedunkelter Umgebung werden dann die Anzahl der Pinholes elektronisch oder visuell ausgezählt. Diese sind bei eingeschalteter Lichtquelle als durchscheinende Punkte erkennbar.

C. Reflektion

Der Reflektionstest wird nach DIN Norm 5036 Teil 3, DIN 5033 Teil 3 und DIN 5033 Teil 4 durchgeführt. Als Messgerät wurde eine Ulbrichtsche Kugel Typ LMT (50 cm Durchmesser) eingesetzt in Verbindung mit einem Digitalem Anzeigegerät TYP LMT Tau-p-Meter.
Die integralen Messungen erfolgen mit einer Lichtquelle entsprechend Normlicht A und V(λ)- angepasstem Si-Photoelement. Es wurde gegen eine Glas-Referenzprobe gemessen. Der Reflektionsgrad wird als Summe aus gerichteten und gestreuten Lichtanteilen in % angegeben.

Polymer 1

Ein für radikalische Polymerisationen konventioneller 200 L-Reaktor wurde mit 2400 g Acrylsäure, 64 kg 2-Ethylhexylacrylat, 6,4 kg Methylacrylat und 53,3 kg Aceton/Isopropanol (95:5) befüllt. Nach 45 Minuten Durchleiten mit Stickstoffgas unter Rühren wurde der Reaktor auf 58 °C hochgeheizt und 40 g 2,2'-Azoisobuttersäurenitril (AIBN) hinzugegeben. Anschließend wurde das äußere Heizbad auf 75 °C erwärmt und die Reaktion konstant bei dieser Außentemperatur durchgeführt. Nach 1 h Reaktionszeit wurde wiederum 40 g AIBN hinzugegeben. Nach 5 h und 10 h wurde mit jeweils 15 kg Aceton/Isopropanol (95:5) verdünnt. Nach 6 und 8 h wurden jeweils 100 g Dicyclohe1xylperoxydicarbonat (Perkadox 16®, Fa. Akzo Nobel) gelöst' in jeweils 800 g Aceton hinzugegeben. Die Reaktion wurde nach 24 h Reaktionszeit abgebrochen und auf Raumtemperatur abgekühlt. Bevor die Masse beschichtet wird, wird das Polymer 1 mit Isopropanol auf 30 % Feststoffgehalt verdünnt. Anschließend wird unter kräftigem Rühren 0.3 Gew.-% Aluminium-(III)-acetylacetonat (3-%ige Lösung Isopropanol) bezogen auf das Polymer 1 hinzugemischt.

Rußmasse 1

In einem Fass wird das Polymer 1 mit Siedegrenzenbenzin auf 30 % Feststoffgehalt verdünnt. Anschließend wird unter kräftigem Rühren 8 Gew.-% Ruß (Printex™ 25, Degussa AG) und 0,3 Gew.-% Aluminium-(III)-acetylacetonat (3-%ige Lösung Isopropanol), jeweils bezogen auf das Polymer 1, hinzugemischt. Zur Homogenisierung wird die Lösung für 10 Minuten mit einem Homogenisierer (Ultraturrax) homogenisiert.

Rußmasse 2

In einem Fass wird das Polymer 1 mit Siedegrenzenbenzin auf 30 % Feststoffgehalt verdünnt. Anschließend wird unter kräftigem Rühren 10 Gew.-% Ruß (Printex™ 25, Degussa AG) und 0,3 Gew.-% Aluminium-(III)-acetylacetonat (3-%ige Lösung Isopropanol) jeweils bezogen auf das Polymer 1 hinzugemischt. Zur Homogenisierung wird die Lösung für 10 Minuten mit einem Homogenisierer (Ultraturrax) homogenisiert.

Titandioxidmasse 1

In einem Fass wird das Polymer 1 mit Siedegrenzenbenzin auf 30 % Feststoffgehalt verdünnt. Anschließend wird unter kräftigem Rühren 12 Gew.-% Titandioxid (< 1μm, 99,9 %+, hauptsächlich Rutilstruktur) und 0,3 Gew.-% Aluminium-(III)-acetylacetonat (3-%ige Lösung Isopropanol) jeweils bezogen auf das Polymer 1 hinzugemischt. Zur Homogenisierung wird die Lösung für 10 Minuten mit einem Homogenisierer (Ultraturrax) homogenisiert.

Vernetzung

Die Haftklebemassen werden aus Lösung auf eine silikonisierte 75 μm starke PET-Folie (Trennfolie der Fa. Siliconature) beschichtet und für 10 Minuten im Trockenschrank bei 100°C getrocknet.

Folien 1 (Al-Bedampfung):

Eine 12 μm dicke PET-Folie, extrudiert ohne Antiblockmittel, der Fa. Mitsubishi (Hostaphan™ 5210) wurde einseitig mit Aluminium bedampft, bis eine vollflächige Aluminiumschicht aufgetragen war. Die Folie wurde in einer Breite von 300 mm nach dem Sputtering-Verfahren bedampft. Dabei wird positiv geladenes, ionisiertes Argongas in eine Hochvakuumkammer geleitet. Die geladenen Ionen treffen dann auf eine negativ geladenen Al-Platte und lösen auf molekularer Ebene Aluminiumpartikel ab, die sich dann auf den Polyesterfilm, der über die Platte geführt wird, ablagern.

Folie 2 (Al-Bedampfung):

Eine 38 μm dicke PET-Folie, extrudiert mit weißen Pigmenten als Füllstoff, der Fa. Toray (Lumirror™ 38E20) wurde einseitig mit Aluminium bedampft, bis eine vollflächige Alumlniumschicht auf einer Seite aufgetragen ist. Die Folie wurde in einer Breite von 300 mm nach dem Sputtering-Verfahren bedampft. Dabei wird positiv geladenes, ionisiertes Argongas in eine Hochvakuumkammer geleitet. Die geladenen Ionen treffen dann auf eine negativ geladenen Al-Platte und lösen auf molekularer Ebene Aluminiumpartikel ab, die sich dann auf den Polyesterfilm, der über die Platte geführt wird, ablagern.

Folie 3:

38 μm dicke PET-Folie, extrudiert mit weißen Pigmenten als Füllstoff, der Fa. Toray (Lumirror™ 38E20).

Folie 4:

12 μm dicke PET-Folie der Fa. Mitsubishi (RNK 12).

Veragleichsbeispiel 1 (schwarz/weiß):

Auf Folie 3 wird aus Lösung zunächst Rußmasse 2 flächig aufgebracht und für 10 Minuten bei 100 °C getrocknet. Der Masseauftrag beträgt 50 g/m$^2$. Dann wird auf diese Schicht Polymer 1 aus Lösung flächig aufgebracht und für 10 Minuten bei 100 °C getrocknet. Der Masseauftrag beträgt für diese Schicht ebenfalls 50 g/m$^2$. Auf der gegenüberliegenden Seite wird dann das Polymer 1 mit 100 g/m$^2$ flächig aufgebracht, wobei wiederum 10 Minuten bei 100 °C getrocknet wurde.

Vergleichsbeispiel 2 (schwarz/weiß):

Auf Folie 2 wird aus Lösung zunächst Rußmasse 1 flächig auf der metallischen Seite aufgebracht und für 10 Minuten bei 100 °C getrocknet. Der Masseauftrag beträgt 50 g/m$^2$.
Dann wird auf dieser Schicht Polymer 1 aus Lösung flächig aufgebracht und für 10 Minuten bei 100 °C getrocknet. Der Masseauftrag beträgt für diese Schicht ebenfalls 50 g/m$^2$. Auf der gegenüberliegenden Seite wird dann das Polymer 1 mit 100 g/m$^2$ flächig aufgebracht, wobei wiederum 10 Minuten bei 100°C getrocknet wurde.

Beispiel 3 (schwarz/weiß):

Auf Folie 4 wird aus Lösung zunächst Rußmasse 1 flächig auf einer Seite aufgebracht und für 10 Minuten bei 100 °C getrocknet. Der Masseauftrag beträgt 50 g/m$^2$. Dann wird auf dieser Schicht Polymer 1 aus Lösung flächig aufgebracht und für 10 Minuten bei 100 °C getrocknet. Der Masseauftrag beträgt für diese Schicht ebenfalls 50 g/m$^2$. Auf der gegenüberliegenden Seite wird dann Titandioxidmasse 1 mit 50 g/m$^2$ flächig aufgebracht und für 10 Minuten bei 100°C getrocknet. Der Masseauftrag beträgt 50 g/m$^2$. Dann wird auf dieser Schicht Polymer 1 aus Lösung flächig aufgebracht und für 10 Minuten bei 100°C getrocknet, wobei nach dem Trocknen der Masseauftrag für diese Schicht wiederum 50 g/m$^2$ beträgt.

Beispiel 4 (schwarz/weiß):

Auf Folie 1 wird aus Lösung zunächst Rußmasse 1 flächig auf der metallischen Seite aufgebracht und für 10 Minuten bei 100 °C getrocknet. Der Masseauftrag beträgt 50 g/m$^2$. Dann wird auf dieser Schicht Polymer 1 aus Lösung flächig aufgebracht und für 10 Minuten bei 100°C getrocknet. Der Masseauftrag beträgt für diese Schicht ebenfalls 50 g/m$^2$. Auf der gegenüberliegenden Seite wird dann Titandioxidmasse 1 mit 50 g/m$^2$ flächig aufgebracht und für 10 Minuten bei 100 °C getrocknet. Der Masseauftrag beträgt 50 g/m$^2$. Dann wird auf dieser Schicht Polymer 1 aus Lösung flächig aufgebracht und für 10 Minuten bei 100 °C getrocknet, wobei nach dem Trocknen der Masseauftrag für diese Schicht wiederum 50 g/m$^2$ beträgt.

**Ergebnisse**

Die Beispiele 1 bis 4 wurden nach den Prüfmethoden A, B und C ausgetestet. Die Ergebnisse sind in Tabelle 1 dargestellt.

Tabelle 1

| Beispiel | Transmission (Test A) | Pinholes (Test B) | Reflektion (total) (Test C) |
|---|---|---|---|
| 1 | < 0,1 % | 0 | 77,2 % |
| 2 | < 0,1 % | 0 | 78,1 % |
| 3 | < 0,1 % | 0 | 83,4 % |
| 4 | < 0,1 % | 0 | 82.,5% |

Den Ergebnissen aus Tabelle 1 kann entnommen werden, dass die Vergleichsbeispiele 1 und 2 und die Beispiele 3 und 4 im Test (A) eine äußerst geringe Transmission von < 0,1 % aufweisen.
Im Test (B) wurde die Anzahl der Pinholes bestimmt. Für keines der genannten Beispiele und Vergleichsbeispiele konnten Pinholes gefunden werden. Weiterhin wurde die Reflektion der weißen Seite bestimmt. In allen Fällen lag die Reflektion bei größer 75 %.
Die Ergebnisse zeigen, dass sich mit den erfindungsgemäßen Klebebändern im LCD-Anwendungsfall eine hohe Lichtausbeute erzielen lässt.

**Patentansprüche**

1. Haftklebeband, insbesondere zur Herstellung einer Verklebung von optischen Flüssigkristall-Datenanzeigen (LCDs), aufweisend eine Ober- und eine Unterseite, mit lichtreflektierenden Eigenschaften auf der Oberseite und lichtabsorbierenden Eigenschaften auf der Unterseite,
weiterhin aufweisend eine Trägerfolie (Schicht a') mit einer Ober- und einer Unterseite,
wobei das Haftklebeband beidseitig mit einer äußeren Haftklebeschicht ausgerüstet ist (Schichten b, b'),
**dadurch gekennzeichnet, dass**
zumindest eine weiß gefärbte Haftklebemassenschicht (Schicht e) zur Bewirkung der Lichtreflektion und zumindest eine schwarz eingefärbte Haftktebemassenschicht (Schicht c) zur Bewirkung der Lichtabsorption zwischen den äußeren Haftklebeschichten vorgesehen ist und zumindest die Haftklebeschicht auf der Oberseite (Schicht b) transparent ist, wobei die zumindest eine weiß gefärbte Schicht (Schicht e) zwischen der Trägerfolie (Schicht a') und der Haftklebeschicht auf der Oberseite (Schicht b) vorgesehen ist und wobei die Haftklebematrix der weiß gefärbten Haftklebemassenschicht (Schicht e) identisch ist mit der Haftklebemasse der Haftklebeschicht auf der Oberseite (Schicht b).

2. Haftklebeband nach zumindest einem der vorangehenden Ansprüche, **dadurch gekennzeichnet, dass**
beide äußeren Haftklebeschichten (b, b') transparent sind.

3. Haftklebeband nach zumindest einem der vorangehenden Ansprüche, **gekennzeichnet durch**
zumindest eine weitere, metallische Schicht (Schicht d).

4. Haftklebeband nach zumindest einem der vorangehenden Ansprüche, **gekennzeichnet durch** die Schichtenabfolge:

   transparente Haftklebemasse (Schicht b) - weiß eingefärbte Haftklebemasse (Schicht e) - transparente Trägerfolie (Schicht a') - schwarz eingefärbte Haftklebemasse (Schicht c) - transparente Haftklebemasse (Schicht b').

5. Haftklebeband nach zumindest einem der vorangehenden Ansprüche, **gekennzeichnet durch** die Schichtenabfolge:

   transparente Haftklebemasse (Schicht b) -weiß eingefärbte Haftklebemasse (Schicht e) - transparente Trägerfolie (Schicht a') - metallische Schicht (Schicht d) - schwarz eingefärbte Haftklebemasse (Schicht c) - transparente Haftklebemasse (Schicht b').

6. Haftklebeband nach zumindest einem der vorangehenden Ansprüche, **dadurch gekennzeichnet, dass**
die Trägerfolie (Schicht a') eine Dicke zwischen 5 und 250 $\mu$m, mehr bevorzugt zwischen 8 und 50 $\mu$m, äußerst bevorzugt zwischen 12 und 36 $\mu$m, insbesondere von 12 $\mu$m aufweist.

7. Haftklebeband nach zumindest einem der vorangehenden Ansprüche, **dadurch gekennzeichnet, dass**
die beidseitigen außen liegenden Haftklebeschichten (Schichten b, b') unabhängig voneinander jeweils eine Schichtdicke zwischen 5 und 250 $\mu$m aufweisen.

8. Haftklebeband nach zumindest einem der Ansprüche 3, 5, 6 oder 7, **dadurch gekennzeichnet, dass**
die metallische Schicht (Schicht d) eine Dicke zwischen 5 nm und 200 nm hat.

9. Haftklebeband nach zumindest einem der vorangehenden Ansprüche, **dadurch gekennzeichnet, dass**
die weiß gefärbte Haftklebemassenschicht (Schicht e) eine Schichtdicke zwischen 5 und 100 $\mu$m aufweist.

10. Verwendung eines Haftklebebandes nach zumindest einem der vorangehenden Ansprüche zur Herstellung oder Verklebung von optischen Flüssigkristall-Datenanzeigen (LCDs).

11. Verwendung nach Anspruch 10 zur Verklebung von LCD-Gläsern.

12. Flüssigkristall-Datenanzeige-Gerät aufweisend ein Haftklebeband nach zumindest einem der Ansprüche 1 bis 9.

## Claims

1. Pressure-sensitive adhesive tape, in particular for the production of an adhesive bond of optical liquid-crystal data displays (LCDs),
having a top side and a bottom side, having light-reflecting properties on the top side and light-absorbing properties

on the bottom side,
additionally having a carrier film (layer a') having a top side and a bottom side,
the pressure-sensitive adhesive tape being furnished on both sides with an outer pressure-sensitive adhesive layer (layers b, b'),
**characterized in that**
at least one white-colored pressure-sensitive adhesive layer (layer e) for effecting light reflection, and at least one black-colored pressure-sensitive adhesive layer (layer c) for effecting light absorption, are each provided between the outer pressure-sensitive adhesive layers, and at least the pressure-sensitive adhesive layer on the top side (layer b) is transparent, the at least one white-colored layer (layer e) being provided between the carrier film (layer a') and the pressure-sensitive adhesive layer on the top side (layer b) and the pressure-sensitive adhesive matrix of the white-colored pressure-sensitive adhesive layer (layer e) being identical to the pressure-sensitive adhesive of the pressure-sensitive adhesive layer on the top side (layer b).

**2.** Pressure-sensitive adhesive tape according to at least one of the preceding claims, **characterized in that** both outer pressure-sensitive adhesive layers (b, b') are transparent.

**3.** Pressure-sensitive adhesive tape according to at least one of the preceding claims, **characterized by** at least one further, metallic layer (layer d).

**4.** Pressure-sensitive adhesive tape according to at least one of the preceding claims, **characterized by** the following layer sequence:

transparent pressure-sensitive adhesive (layer b) - white-colored pressure-sensitive adhesive (layer e) - transparent carrier film (layer a') - black-colored pressure-sensitive adhesive (layer c) - transparent pressure-sensitive adhesive (layer b').

**5.** Pressure-sensitive adhesive tape according to at least one of the preceding claims, **characterized by** the following layer sequence:

transparent pressure-sensitive adhesive (layer b) - white-colored pressure-sensitive adhesive (layer e) - transparent carrier film (layer a') - metallic layer (layer d) - black-colored pressure-sensitive adhesive (layer c) - transparent pressure-sensitive adhesive (layer b').

**6.** Pressure-sensitive adhesive tape according to at least one of the preceding claims, **characterized in that** the carrier film (layer a') has a thickness of between 5 and 250 $\mu$m, more preferably between 8 and 50 $\mu$m, very preferably between 12 and 36 $\mu$m, and more particularly of 12 $\mu$m.

**7.** Pressure-sensitive adhesive tape according to at least one of the preceding claims, **characterized in that** the outwardly situated pressure-sensitive adhesive layers on both sides (layers b, b') each independently of one another have a thickness of between 5 and 250 $\mu$m.

**8.** Pressure-sensitive adhesive tape according to at least one of claims 3, 5, 6 and 7, **characterized in that** the metallic layer (layer d) has a thickness of between 5 nm and 200 nm.

**9.** Pressure-sensitive adhesive tape according to at least one of the preceding claims, **characterized in that** the white-colored pressure-sensitive adhesive layer (layer e) has a thickness of between 5 and 100 $\mu$m.

**10.** Use of a pressure-sensitive adhesive tape according to at least one of the preceding claims for producing or adhesively bonding optical liquid-crystal data displays (LCDs).

**11.** Use according to Claim 10 for adhesively bonding LCD glasses.

**12.** Liquid-crystal data display device comprising a pressure-sensitive adhesive tape according to at least one of Claims 1 to 9.

## Revendications

1. Bande autoadhésive, en particulier pour la réalisation d'un collage d'affichages optiques à cristaux liquides (LCD), présentant une face supérieure et une face inférieure, avec des propriétés de réflexion de la lumière sur la face supérieure et des propriétés d'absorption de la lumière sur la face inférieure,
présentant en outre une feuille support (couche a') avec une face supérieure et une face inférieure,
où la bande autoadhésive est apprêtée sur les deux faces avec une couche autoadhésive extérieure (couches b, b'), **caractérisée en ce qu'**on a prévu au moins une couche de masse autoadhésive teintée en blanc (couche e) pour provoquer la réflexion de la lumière et au moins une couche de masse autoadhésive teintée en noir (couche c) pour provoquer l'absorption de la lumière entre les couches autoadhésives extérieures et au moins la couche autoadhésive sur la face supérieure (couche b) est transparente, au moins une couche teintée en blanc (couche e) étant prévue entre la feuille support (couche a') et la couche autoadhésive sur la face supérieure (couche b) et la matrice autoadhésive de la couche de masse autoadhésive teintée en blanc (couche e) étant identique à la masse autoadhésive de la couche autoadhésive sur la face supérieure (couche b).

2. Bande autoadhésive selon au moins l'une quelconque des revendications précédentes, **caractérisée en ce que** les deux couches autoadhésives extérieures (b, b') sont transparentes.

3. Bande autoadhésive selon au moins l'une quelconque des revendications précédentes, **caractérisée par** au moins une autre couche métallique (couche d).

4. Bande autoadhésive selon au moins l'une quelconque des revendications précédentes, **caractérisée par** l'ordre des couches :

   masse autoadhésive transparente (couche b) - masse autoadhésive teintée en blanc (couche e) - feuille support transparente (couche a') - masse autoadhésive teintée en noir (couche c) - masse autoadhésive transparente (couche b').

5. Bande autoadhésive selon au moins l'une quelconque des revendications précédentes, **caractérisée par** l'ordre des couches :

   masse autoadhésive transparente (couche b) - masse autoadhésive teintée en blanc (couche e) - feuille support transparente (couche a') - couche métallique (couche d) - masse autoadhésive teintée en noir (couche c) - masse autoadhésive transparente (couche b').

6. Bande autoadhésive selon au moins l'une quelconque des revendications précédentes, **caractérisée en ce que** la feuille support (couche a') présente une épaisseur entre 5 et 250 $\mu$m, plus préférablement entre 8 et 50 $\mu$m, de manière extrêmement préférée entre 12 et 36 $\mu$m, en particulier de 12 $\mu$m.

7. Bande autoadhésive selon au moins l'une quelconque des revendications précédentes, **caractérisée en ce que** les deux couches autoadhésives extérieures sur les deux faces (couches b, b') présentent, indépendamment l'une de l'autre, à chaque fois une épaisseur de couche entre 5 et 250 $\mu$m.

8. Bande autoadhésive selon au moins l'une quelconque des revendications 3, 5, 6 ou 7, **caractérisée en ce que** la couche métallique (couche d) présente une épaisseur entre 5 nm et 200 nm.

9. Bande autoadhésive selon au moins l'une quelconque des revendications précédentes, **caractérisée en ce que** la couche de masse autoadhésive teintée en blanc (couche e) présente une épaisseur de couche entre 5 et 100 $\mu$m.

10. Utilisation d'une bande autoadhésive selon au moins l'une quelconque des revendications précédentes pour la réalisation ou pour le collage d'affichages optiques à cristaux liquides (LCD).

11. Utilisation selon la revendication 10 pour le collage d'écrans LCD.

12. Appareil d'affichage à cristaux liquides présentant une bande autoadhésive selon au moins l'une quelconque des revendications 1 à 9.

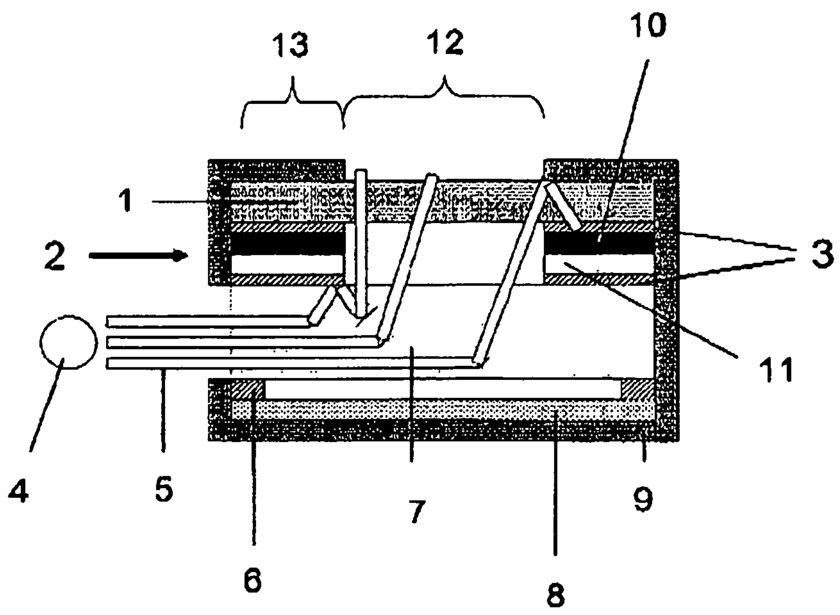


Fig. 1

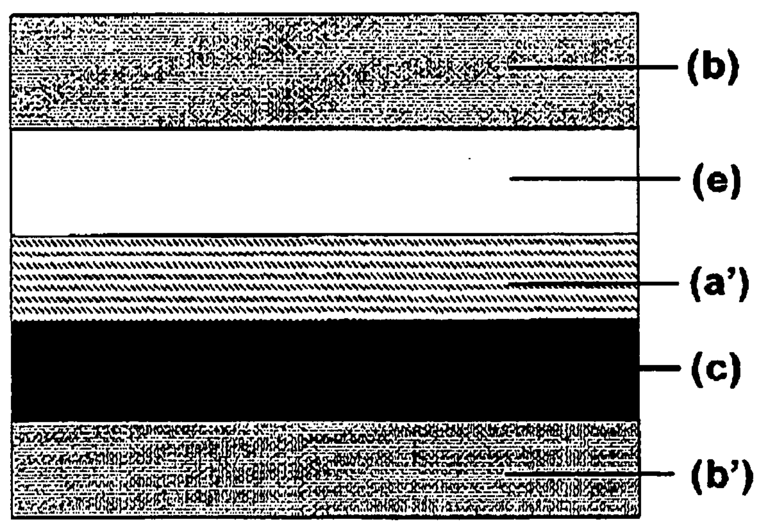


Fig. 2

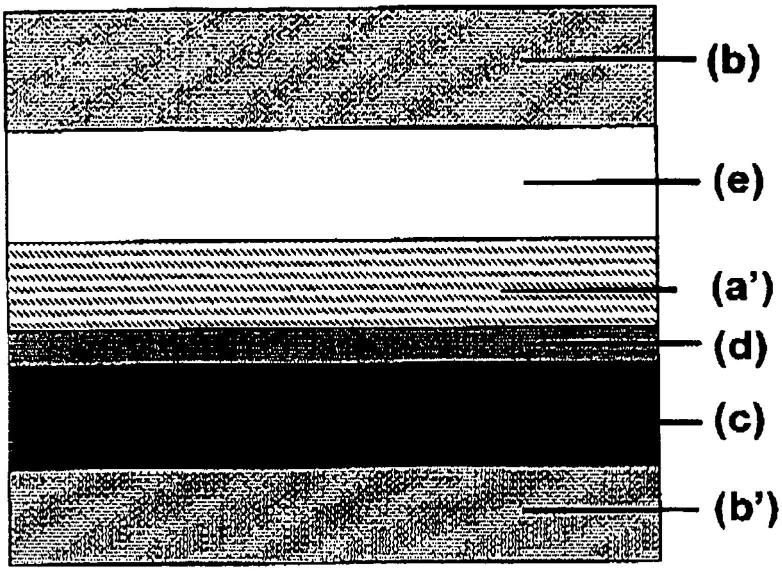


Fig. 3

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- JP 2002350612 A
- JP 2002023663 A
- DE 10243215 A
- US 2004028895 A
- WO 2005019367 A
- WO 9801478 A1
- US 4581429 A
- WO 9813392 A1
- EP 735052 A1
- WO 9624620 A1
- WO 9844008 A1
- DE 19949352 A1
- EP 0824111 A1
- EP 826698 A1
- EP 824110 A1
- EP 841346 A1
- EP 850957 A1
- US 5945491 A
- US 5854364 A
- US 5789487 A

### In der Beschreibung aufgeführte Nicht-Patentliteratur

- **Donatas Satas.** Handbook of Pressure Sensitive Adhesive Technology. van Nostrand, 1989
- **Fouassier.** Photoinitiation, Photopolymerization and Photocuring: Fundamentals and Applications. Hanser-Verlag, 1995
- **Carroy et al.** Chemistry and Technology of UV and EB Formulation for Coatings, Inks and Paints. SITA, 1994
- **Donatas Satas.** Handbook'' of Pressure Sensitive Adhesive Technology. van Nostrand, 1989
- **T.G. Fox.** *Bull. Am. Phys. Soc.,* 1956, vol. 1, 123
- **Houben Weyl.** *Methoden der Organischen Chemie,* vol. E 19a, 60-147
- *Macromolecules,* 1995, vol. 28, 7886
- **Skelhome.** Electron Beam Processing, in Chemistry and Technology of UV and EB formulation for Coatings, Inks and Paints. SITA, 1991, vol. 1